# EUROPÄISCHE PATENTSCHRIFT

(11) **EP 4 083 122 B1**
(45) Veröffentlichungstag und Bekanntmachung des Hinweises auf die Patenterteilung: **14.02.2024**
(21) Anmeldenummer: 21171405.0
(22) Anmeldetag: 30.04.2021
(51) Int. Cl.: C08J 9/00, B29C 44/00, C08J 9/12, C08J 9/16

(54) **POLYMERSCHAUMPARTIKEL UND VERFAHREN ZUR HERSTELLUNG DERSELBEN AUF DER BASIS VON POLYBUTYLENTEREPHTHALAT**
POLYMER FOAM PARTICLE AND METHOD FOR PRODUCING THE SAME BASED ON POLYBUTYLENE TEREPHTHALATE
PARTICULE EN MOUSSE POLYMÈRE ET SON PROCÉDÉ DE FABRICATION À BASE DE POLYBUTYLÈNE TÉRÉPHTALATE

(43) Veröffentlichungstag der Anmeldung: 02.11.2022
(73) Patentinhaber: LANXESS Deutschland GmbH, 50569 Köln (DE)
(72) Erfinder: KRAUSE, Frank, 51469 Bergisch Gladbach (DE); BIENMÜLLER, Matthias, 47803 Krefeld (DE); FREITAG, Matthias, 50735 Köln (DE)
(74) Vertreter: Envalior Association

(56) Entgegenhaltungen:
- EP-A1- 3 647 348
- CN-A- 109 705 542
- US-A1- 2020 190 315

## Beschreibung

Die Erfindung betrifft Polymerschaumpartikel, sowohl in expandierter als auch in teilweise expandierter Form, aus einer Polymermatrix basierend auf einem Blend enthaltend Polylbutylenterephthalat und Polyethylenterephthalat, ein Verfahren zu deren Herstellung, sowie die Verwendung von Polyethylenterephthalat zur Verbreiterung des Verarbeitungsfensters von Polybutylenterephthalat basierten Polymerschaumpartikeln bei der Verarbeitung zu Formteilen.

Thermoplast basierte, mittels eines Treibmittels expandierbare oder teilweise expandierte Polymerschaumpartikel finden vornehmlich zur Herstellung von Polymer-Formteilen Verwendung. Dazu werden sie in einem entsprechenden Formwerkzeug, insbesondere unter Einwirkung von Heißdampf, oberflächig unter Bildung eines Formteils miteinander verschweißt. Sofern in den Polymerschaumpartikeln noch ein Anteil des Treibmittels enthalten ist, werden diese im Formwerkzeug expandiert bzw. aufgeschäumt, wodurch eine großflächige Schweißverbindung der Polymerschaumpartikel untereinander erzielt werden kann und ein Formteil geringer Dichte erhältlich ist.

Alternativ können expandierbare oder teilweise expandierte Polymerschaumpartikel unter Einwirkung von elektromagnetischer Strahlung, insbesondere im Mikrowellen-/ Radiofrequenzbereich oder dergleichen, erhitzt werden, um sie in einem Formwerkzeug gleichfalls miteinander zu verschweißen. Sofern die jeweils eingesetzten Polymere nicht selbst ein hinreichendes Absorptionsvermögen für den jeweiligen Frequenzbereich der elektromagnetischen Strahlung besitzen, können sie mit einer elektromagnetischen Strahlung, z. B. im Mikrowellen- und/oder Radiofrequenzspektrum, absorbierenden Medium, insbesondere Wasser, beschichtet bzw. benetzt werden.

Solchermaßen hergestellte Polymer-Formteile zeichnen sich aufgrund der Kompressibilität des aus den expandierten und miteinander verschweißten Polymerschaumpartikeln gebildeten Polymerschaums durch geringe Dichte, hohes Wärme-, hohes Schall- und hohes Stoßabsorptionsvermögen aus. Sie werden daher vornehmlich für Dämmstoffmaterialien, wie Dämmplatten zur Isolierung von Gebäuden oder anderen Dämmbauteilen, z. B. für Rollladenkästen, Fensterprofile, für den Heizungsbau, für Isolierbehälter und dergleichen, in der Automobiltechnik, für Verpackungsmaterialien, als Kernmaterialien von sandwichartigen Formteilen, z. B. Sportartikel, Surfbretter, Bootskörper etc., oder für den Modellbau eingesetzt. Darüber hinaus bestehen Anwendungsgebiete für lose, d. h. nicht zu einem Formteil miteinander verschweißte, expandierte Polymerschaumpartikel z. B. als Füllmaterialien für Verpackungszwecke, für Sitzsäcke und dergleichen, als Dämmmaterialien zur Einblasdämmung oder auch als Schneeimitat, z. B. zu Dekorationszwecken.

Die Herstellung expandierbarer oder teilweise expandierter Polymerschaumpartikel aus thermoplastischen Polymeren geschieht in der Praxis vornehmlich im Rahmen eines Extrusionsvorgangs, woran sich ein Granuliervorgang des aus einer Düse oder eines Düsenaggregats eines Extruders austretenden Polymerstrangs anschließt. Es wird das thermoplastische Basispolymer als Pulver oder als Granulat in einen Extruder gegeben, dort plastifiziert und homogenisiert. Sodann wird - sofern nicht bereits in dem eingesetzten Pulver oder Granulat enthalten - ein Treibmittel in das Plastifikat, vorzugsweise unter Druck, eingebracht. Aufgrund des Druckniveaus im Extruder, welches bis zu einigen 100 bar betragen kann, liegt das Treibmittel auch bei der Schmelztemperatur des plastifizierten Polymers in flüssiger und/oder überkritischer Phase vor und wird insbesondere im Plastifikat gelöst. Unmittelbar nach Austritt aus der Extruderdüse kommt es infolge des abrupten Druckabfalls, insbesondere auf Umgebungsdruck, zum Expandieren bzw. Aufschäumen des Polymerstrangs infolge rascher Expansion des Treibmittels in die Gasphase. Im Falle des Einsatzes einer Lochplatte als Extruderauslass erhält man mehrere Polymerstränge in denen die Expansion des Treibmittels gleichzeitig erfolgt. Die Zerkleinerung bzw. Granulierung des Polymerstrangs bzw. der Polymerstränge geschieht üblicherweise mittels einer dem Extruder nachgeordneten Schneideeinrichtung. Vorzugsweise handelt es sich dabei um eine koaxial zur Extruderdüse rotierende Schneide. Während es bei kompakten bzw. ungeschäumten Polymeren auch bekannt ist, den/die Polymerstrang/-stränge durch ein Wasserbad zu leiten und anschließend - nach hinreichender Abkühlung - zu granulieren, erfolgt die Zerkleinerung bei expandierten bzw. aufgeschäumten Polymeren mittels der Schneideeinrichtung z. B. in einer mit Wasser gefüllten Kammer, um den mit Treibmittel versetzten Polymerstrang schnell abzukühlen und die bei der Expansion des Treibmittels entstehende feinporige Schaumstruktur "einzufrieren".

Um für eine möglichst homogene, innige Schweißverbindung der expandierbaren oder bereits im Granuliervorgang zumindest teilweise expandierten Polymerschaumpartikel in einem aus diesen erzeugten Polymer-Formteil zu sorgen, ist es in der Regel erwünscht, dass die Polymerschaumpartikel eine möglichst sphärische, zumindest aber abgerundete Außenkontur besitzen. Hieraus ergibt sich anlässlich der Herstellung der Polymerschaumpartikel selbst das Erfordernis, den aus der Extruderdüse ausgebrachten, aufschäumenden Polymerstrang möglichst schnell zu den Polymerschaumpartikeln zu zerkleinern bzw. zu granulieren, da sich eine kugelförmige Gestalt der Partikel insbesondere dann erzielen lässt, solange sich der Polymerstrang noch in einem zumindest teilplastischen Zustand befindet. Zudem sollte das aus der Extruderdüse austretende Polymer jedoch auch möglichst schnell abgekühlt bzw. "abgeschreckt" werden, damit sich eine im Wesentlichen homogene, feinporige Schaumstruktur ausbilden kann und die aus expandierendem Treibmittel gebildeten Bläschen in der Polymermatrix nicht kollabieren.

Es ist auch bekannt, den Expandier- bzw. Schäumvorgang getrennt vom Extrusionsvorgang vorzunehmen, indem der aus der Extruderdüse ausgebrachte Polymerstrang in weitestgehend ungeschäumter Form zunächst granuliert und anschließend - z. B. unter Initiierung eines geeigneten, im Polymergranulat enthaltenen Treibmittels mit Heißdampf in einer Aufschäumeinheit - aufgeschäumt wird.

Während einerseits für die Herstellung von expandierbaren oder teilweise expandierten Polymerschaumpartikeln in der Praxis vornehmlich thermoplastische Polymere aus fossilen Rohstoffen zum Einsatz gelangen, wird andererseits an Möglichkeiten zur Herstellung neuartiger Polymerschaumpartikel sowie den damit verbundenen Herausforderungen an die Prozessführung und Werkzeugtechnik geforscht. Unter anderem stehen dabei vermehrt technische Thermoplaste im Fokus, die auch als Matrixmaterial für Faser-Kunststoff-Verbunde in Anwendungen bei erhöhten Temperaturen zum Einsatz kommen. Dies ermöglicht es, die hervorragenden thermischen und mechanischen Eigenschaften von technischen Kunststoffen mit der geringen Dichte von Schäumen zu kombinieren und die Charakteristik von Materialverbunden maßgeschneidert einzustellen.

Extrem leichte Partikelschaumstrukturen in Form sogenannter Sandwichkonzepte rücken ebenfalls immer mehr in den Fokus von Forschung und Entwicklung, wenn es gilt, Lösungen gegen steigende Kosten bei Erdöl basierten Treibstoffen entgegen zu wirken, strengeren gesetzlichen Vorgaben bezüglich CO₂-Emissionen von Kraftfahrzeugen zu genügen oder thermische Isolierungen zu realisieren. So werden zum Beispiel im Bereich der Elektromobilität Polymerschäume als thermisch isolierendes Kernmaterial immer bedeutender. Zukunftsweisend sind Multi-Materialsysteme mit Schaumkernen aus thermoplastischen Schaumpartikeln.

Schäume auf Polyesterbasis haben jedoch aufgrund von verarbeitungstechnischen Herausforderungen und üblicherweise hohen Dichten im Vergleich zu Polystyrol- oder Polyurethanschäumen bisher eine vergleichsweise geringe Anwendungsbreite. Für die erfolgreiche Umsetzung eines Partikelschaums aus Polybutylenterephthalat (PBT) müssen mehrere Hürden überwunden werden. Zum einen hat PBT eine für Polyester typisch niedrige Schmelzefestigkeit, welche einer hohen Expansion während des Schäumens entgegensteht. Zum anderen ergibt sich durch die Teilkristallinität ein vergleichbar schmales Verarbeitungsfenster bei der Einstellung der Schmelztemperatur während des Schäumprozesses.

Polybutylenterephthalat [CAS No. 24968-12-5] eignet sich jedoch hervorragend zur Anwendung im Spritzgießen bei Massetemperaturen von 230 bis 270°C und weist dabei ein günstiges Abkühl- und Prozessverhalten auf (J. Falbe, M. Reglitz, RÖMPP Lexikon Chemie. Band 5: PI-S, 10. Auflage, Thieme, 1998). Der Schmelzpunkt von PBT wird mit 223°C angegeben, die Glastemperatur liegt bei 47°C, der Glasübergang der amorphen Phase liegt bei 60°C. Polybutylenterephthalat wird insbesondere wegen seiner hohen Festigkeit und Steifigkeit, seiner im Vergleich zu Polyoxymethylen oder Polyamid sehr hohen Maßbeständigkeit und wegen seiner guten Reibungs- und Verschleißeigenschaften geschätzt.

Der schmale Schmelzbereich der PBT-Kristallite, der insbesondere das Verarbeitungsfenster von PBT beim Partikelschäumen erheblich einschränkt, verschärft die Anforderungen an die Prozesstechnik ganz besonders. Das Verarbeitungsfenster von PBT liegt erfahrungsgemäß bei 225 +/- 2°C.

Die zudem geringe und deshalb in Schäumverfahren nachteilige Schmelzefestigkeit von Polyestern wie PBT untersuchte T. Standau et. al., in Ind. Eng. Chem. Res. 2018, 57, 17170-17176**.** Die Hauptprobleme bei der Herstellung von Partikelschäumen aus PBT werden darin in
(i) der Notwendigkeit die rheologischen Eigenschaften (einschließlich der geringen Schmelzefestigkeit) zu verbessern,
(ii) das Einpassen in das enge Verarbeitungsfenster und
(iii) in der Fusion der Polymerschaumpartikel gesehen.

Standau setzt deshalb den Kettenverlängerer Joncryl^{®} ADR 4468 ein. Hierbei handelt es sich um ein Styrol-Acrylat-Copolymer mit Epoxyfunktionalität zur Verbesserung der Schmelzviskosität; siehe auch V. Frenz et. al., Multifunctional Polymers as Chain Extenders and Compatibilizers for Polycondensates and Biopolymers, ANTEC 2008, 1682-1686**.**

Nachteilig an der Lösung des Stands der Technik ist der Eintrag von Styrol-Acrylat-Copolymer und damit eines andersartigen Polymers in das PBT. Trotz dieses Fortschritts besteht weiterhin ein hoher Bedarf an expandierbaren Polyestergranulaten und Polyesterschäumen auf Basis von PBT die neben einer geringen Dichte sich durch einfache Verarbeitbarkeit sowie durch hohe Freiheitsgrade in der Formgebung auszeichnen, zumal sie sehr ressourcenschonend einsetzbar sind, da die Dichte des Schaumstoffes und damit der Rohstoffbedarf und die Schaumeigenschaften beim Vorschäumen eingestellt werden können. Schaumpartikel können zu Blöcken oder komplexen Partikelschaumstrukturen bzw. Formteilen in einem Arbeitsschritt verschäumt werden. Werden solche Partikelschaumstrukturen im Kraftfahrzeugbau verwendet, sollten diese allerdings die Temperaturen während eines elektrochemischen Lackierverfahrens (KTL = kathodische Tauchlackierung), bei dem das zu lackierende Objekt einem Bad aus wässrigem Tauchlack unter einer Gleichspannung von 3.000 Volt und 220 bis 290 Ampere ausgesetzt und anschließend die dabei entstehende Beschichtung in einem KTL-Trockenofen ca. 30

Minuten lang bei 200°C eingebrannt wird, überstehen können.

CN 109 705 542 A offenbart expandierte Perlen, die Polybutylenterephthalat oder Polyethylenterephthalat und einen Schaumbildner wie Kohlendioxid enthalten.

Es wurde nun überraschend gefunden, dass sich thermoplastische, expandierbare oder teilweise expandierte Polymerschaumpartikel basierend auf einer Polymermatrix aus Polylbutylenterephthalat (PBT) herstellen lassen, indem man das PBT mit Polyethylenterephthalat modifiziert, wodurch das Verarbeitungsfenster des PBT in einem Schäumprozess erheblich verbreitert wird, ohne dass die sonstigen Eigenschaften des PBT wesentlich negativ beeinflusst werden.

### Erfindungsgegenstand

Gegenstand der vorliegenden Erfindung sind **Polymerschaumpartikel** enthaltend wenigstens ein Treibmittel ausgewählt aus der Gruppe Luft, Stickstoff und Kohlendioxid, insbesondere Kohlendioxid, sowie auf 100 Massenanteile Polybutylenterephthalat 25 bis 320 Massenanteile Polyethylenterephthalat.

Gegenstand dieser Erfindung ist auch ein **Verfahren zur Herstellung von Polymerschaumpartikeln** indem man Pulver oder Granulat einer Polymermatrix
(a) in einen Extruder unter Ausschluss von Vernetzungsmitteln und/oder Kettenverlängerungsmitteln einsetzt und plastifiziert und homogenisiert,
(b) ein Treibmittel ausgewählt aus der Gruppe Luft, Stickstoff und Kohlendioxid, insbesondere Kohlendioxid, in die plastifizierte Polymermatrix in einen Extruder eindispergiert,
(c) die mit dem Treibmittel versetzte, plastifizierte Polymermatrix aus dem Extruder durch eine Extruderdüse austrägt,
(d) den extrudierten und mit dem Treibmittel versetzten Polymermatrixstrang stromab der Extruderdüse unter Bildung expandierbarer oder zumindest teilweise expandierter Polymerschaumpartikel granuliert, und
(e) die Polymerschaumpartikel expandiert, vorzugsweise thermisch expandiert, insbesondere in einem Infrarotdurchlaufofen expandiert,
wobei die Polymermatrix auf 100 Massenanteile Polylbutylenterephthalat 25 bis 320 Massenanteile Polyethylenterephthalat enthält.

Vorzugsweise werden die Verfahrensschritte (c) und (d) in oder mit einem Kühlfluid durchgeführt. Das in Schritt (c) und (d) einzusetzende Kühlfluid kann in einer weiteren Ausführungsform unter erhöhtem Druck stehen. Erhöhter Druck bedeutet im Sinne der vorliegenden Erfindung vorzugweise ein Druck im Bereich von 1,5 bis 30 bar.

Im Gegensatz zum Stand der Technik werden erfindungsgemäß mit PET und PBT idealerweise gleichartige Thermoplaste miteinander verarbeitet und dabei gezielt die Einstellung des optimalen Prozessfensters für das Verschäumen genutzt, wobei auf die zusätzliche Verwendung eines artungleichen Polymers verzichtet werden kann.

Die Versuche im Rahmen der vorliegenden Erfindung zeigen überraschenderweise zudem, dass der Einsatz von PET in PBT die Wachstumsgeschwindigkeit von an Nukleierungspunkten entstehenden Schaumzellen reduziert. Infolgedessen entstehen unter Einsatz von erfindungsgemäß einzusetzendem PET an mehr Nukleierungspunkten Schaumzellen. Dies wiederum führt überraschenderweise zu PBT basierten Polymerschaumpartikeln mit einer gleichmäßigeren Zellstruktur aus kleinen Schaumzellen. Die Nukleierung, d. h. die Bildung eines Zellkeims (Nukleus), beginnt nämlich in den mit Treibgasen übersättigten PBT-Polymerschmelzen. Diese Übersättigung wird üblicherweise entweder durch Dekompression einer sich im Gleichgewichtszustand befindlichen Lösung aus einem Polymer und einem physikalischen Treibmittel, oder durch Erwärmen einer mit sich zersetzendem chemischen Treibmittel versetzten Polymerschmelze erreicht. Eingemischte, feste Partikel agieren in Polymerschmelzen meist als Nukleierungspunkte. Hat eine Schaumzelle eine kritische Größe erreicht, wächst sie durch die Diffusionsneigung des Treibgases in der Schaumzelle, bis diese stabilisiert ist oder zerbricht. Die dünnen, stark gedehnten Zellwände in thermoplastischen Schmelzen sind von sich aus instabil, wenn sie nicht stabilisiert werden. Schaumzellen können üblicherweise entweder physikalisch oder chemisch stabilisiert werden. Wenn physikalische Treibmittel verwendet werden und die Expansion mittels Dekompression erreicht wird, werden Schaumzellen physikalisch stabilisiert. Dabei werden die Schaumzellen aufgrund eines abrupten Anstiegs des Elastizitätsmoduls durch die biaxiale Dehnung der Schaumzellwände stabilisiert. Dieser Effekt wird als Dehnverfestigung (englisch: "strain-hardening") bezeichnet. Auch die Geschwindigkeit der Schaumzellausdehnung beeinflusst den Dehnverfestigungseffekt. Zusätzlich spielt die Phasentrennung des Treibgases bei der Schaumzellwandstabilisierung eine entscheidende Rolle. Die Entstehung der Gasphase bewirkt einen Kühleffekt durch Entzug von Wärme aus der Polymerschmelze. Durch den Kühleffekt wird die Dehnviskosität der Schmelze gesteigert. Die Eignung eines Polyestertyps zur physikalischen Stabilisierung ist gleichbedeutend mit der Eignung, geschlossenzellige Strukturen zu verwirklichen und wird als "Schäumbarkeit des Polymers" bezeichnet.

Um am Werkzeugaustritt das Aufschäumen einer treibfluidbeladenen Schmelze auszulösen, muss das Sorptionsvermögen des zu schäumenden Polymers vermindert werden. Nach dem Henry'schen Gesetz ist dies prinzipiell auf zwei Arten zu erzielen: mit einer Erhöhung der Temperatur oder einer Verringerung des Drucks. Da Kunststoffe im allgemeinen schlechte Wärmeleiter sind und ferner eine Temperaturerhöhung die Schmelzviskosität herabsetzen würde, wird eine Übersättigung der Schmelze mit Treibfluid in der Praxis durch eine Verringerung des Drucks realisiert. Die Versuche im Rahmen der vorliegenden Erfindung zeigen jedoch überraschenderweise, dass durch den Einsatz von PET in PBT die Schmelzviskosität des PBT erhöht wird. Die Erfindung betrifft deshalb auch die **Verwendung von PET zur Erhöhung der Schmelzviskosität** von PBT von 109 bis 112 auf >200 Pa•s (Pascal x Sekunde), vorzugsweise von PBT zur Herstellung von Partikelschäumen. Insbesondere bevorzugt erfolgt die Erhöhung der Schmelzviskosität von PBT wenn zusätzlich zum PET noch Talkum eingesetzt wird.

Gegenstand der Erfindung ist aber auch ein Verfahren zur **Verbreiterung des Verarbeitungsfensters von PBT** als Matrixpolymer beim Formschäumen, indem der Aufschmelzbereich PBT basierter, expandierbarer oder zumindest teilweise expandierter Polymerschaumpartikel von 225 +/- 2°C auf einen Bereich von 223 bis 255°C erweitert wird, wobei auf 100 Massenanteile Polylbutylenterephthalat 25 bis 320 Massenanteile Polyethylenterephthalat eingesetzt werden.

Bevorzugter Gegenstand der Erfindung ist auch ein Verfahren zur **Verbreiterung des Verarbeitungsfensters von PBT** als Matrixpolymer beim Formschäumen, indem der Aufschmelzbereich PBT basierter, expandierbarer oder zumindest teilweise expandierter Polymerschaumpartikel von 225 +/- 2°C auf einen Bereich von 223 bis 255°C erweitert wird, wobei auf 100 Massenanteile Polylbutylenterephthalat 25 bis 320 Massenanteile Polyethylenterephthalat und 0,1 bis 20 Massenanteile, bevorzugt 0,1 bis 5 Massenanteile, Talkum eingesetzt werden.

Die Erfindung betrifft auch die **Verwendung von Polyethylenterephthalat zur Verbreiterung des Verarbeitungsfensters** von Polybutylenterephthalat als Matrixpolymer enthaltenden expandierbaren oder zumindest teilweise expandierten Polymerschaumpartikeln beim Formschäumen von 225°C +/-2°C auf den Bereich von 223 bis 255°C **und/oder zur Erhöhung der Schmelzviskosität** von als Matrixpolymer für expandierbare oder zumindest teilweise expandierte Polymerschaumpartikel beim Formschäumen einzusetzendem Polybutylenterephthalat, indem auf 100 Massenanteile Polylbutylenterephthalat 25 bis 320 Massenanteile Polyethylenterephthalat eingesetzt werden.

Die Erfindung betrifft bevorzugt auch die **Verwendung von Polyethylenterephthalat zur Verbreiterung des Verarbeitungsfensters** von Polybutylenterephthalat als Matrixpolymer enthaltenden expandierbaren oder zumindest teilweise expandierten Polymerschaumpartikeln beim Formschäumen von 225°C +/-2°C auf den Bereich von 223 bis 255°C **und/oder zur Erhöhung der Schmelzviskosität** von als Matrixpolymer für expandierbare oder zumindest teilweise expandierte Polymerschaumpartikel beim Formschäumen einzusetzendem Polybutylenterephthalat, indem auf 100 Massenanteile Polylbutylenterephthalat 25 bis 320 Massenanteile Polyethylenterephthalat und 0,1 bis 20 Massenanteile, bevorzugt 0,1 bis 5 Massenanteile, Talkum eingesetzt werden.

Bei den erfindungsgemäßen PBT basierten Polymerschaumpartikeln handelt es sich um expandierbare oder zumindest teilweise expandierte Polymerschaumpartikel zur Herstellung von Partikelschäumen oder darauf basierenden Sandwichstrukturen.

Zur Klarstellung sei angemerkt, dass vom Rahmen der vorliegenden Erfindung alle aufgeführten allgemeinen oder in Vorzugsbereichen genannten Definitionen und Parameter in beliebigen Kombinationen umfasst sind. Dies gilt sowohl für die Polymerschaumpartikel, deren Herstellungsverfahren als auch für die im Rahmen der vorliegenden Erfindung beschriebenen Verwendungen. Die im Rahmen dieser Anmeldung genannten Normen beziehen sich auf die zum Anmeldetag dieser Erfindung geltenden Fassung.

### Weitere bevorzugte Ausführungen der Erfindung

Bevorzugter Gegenstand der vorliegenden Erfindung sind Polymerschaumpartikel mit einer Dichte im Bereich von 50 bis 700 kg/m³ enthaltend wenigstens ein Treibmittel ausgewählt aus der Gruppe Luft, Stickstoff und Kohlendioxid, insbesondere Kohlendioxid, sowie auf 100 Massenanteile Polybutylenterephthalat 25 bis 320 Massenanteile Polyethylenterephthalat.

Besonders bevorzugter Gegenstand der vorliegenden Erfindung sind Polymerschaumpartikel mit einer Dichte im Bereich von 90 bis 400 kg/m³ enthaltend wenigstens ein Treibmittel ausgewählt aus der Gruppe Luft, Stickstoff und Kohlendioxid, insbesondere Kohlendioxid, sowie auf 100 Massenanteile Polybutylenterephthalat 25 bis 320 Massenanteile Polyethylenterephthalat.

Ganz besonders bevorzugter Gegenstand der vorliegenden Erfindung sind Polymerschaumpartikel mit einer Dichte im Bereich von 50 bis 700 kg/m³ enthaltend wenigstens ein Treibmittel ausgewählt aus der Gruppe Luft, Stickstoff und Kohlendioxid, insbesondere Kohlendioxid, sowie auf 100 Massenanteile Polybutylenterephthalat 25 bis 320 Massenanteile Polyethylenterephthalat und 0,1 bis 20 Massenanteile, bevorzugt 0,1 bis 5 Massenanteile, Talkum.

Insbesondere ganz besonders bevorzugter Gegenstand der vorliegenden Erfindung sind Polymerschaumpartikel mit einer Dichte im Bereich von 90 bis 400 kg/m³ enthaltend wenigstens ein Treibmittel ausgewählt aus der Gruppe Luft, Stickstoff und Kohlendioxid, insbesondere Kohlendioxid, sowie auf 100 Massenanteile Polybutylenterephthalat 25 bis 320 Massenanteile Polyethylenterephthalat und 0,1 bis 20 Massenanteile, bevorzugt 0,1 bis 5 Massenanteile, Talkum.

In bevorzugter Ausführungsform betrifft die vorliegende Erfindung ein **Verfahren zur Herstellung von Polymerschaumpartikeln,** vorzugsweise mit einer Dichte im Bereich von 50 bis 700 kg/m³, besonders bevorzugt mit einer Dichte im Bereich von 90 bis 400 kg/m³, indem man Pulver oder Granulat einer Polymermatrix
(a) in einen Extruder unter Ausschluss von Vernetzungsmitteln und/oder Kettenverlängerungsmitteln einsetzt und plastifiziert und homogenisiert,
(b) ein gasförmiges Treibmittel ausgewählt aus der Gruppe Luft, Stickstoff und Kohlendioxid in die plastifizierte Polymermatrix in einen Extruder eindispergiert,
(c) die mit dem Treibmittel versetzte, plastifizierte Polymermatrix aus dem Extruder durch eine Extruderdüse austrägt,
(d) den extrudierten und mit dem Treibmittel versetzten Polymermatrixstrang stromab der Extruderdüse unter Bildung expandierbarer oder zumindest teilweise expandierter Polymerschaumpartikel granuliert, und
(e) die Polymerschaumpartikel expandiert, vorzugsweise thermisch expandiert, insbesondere in einem Infrarotdurchlaufofen expandiert,
wobei die Polymermatrix auf 100 Massenanteile Polylbutylenterephthalat 25 bis 320 Massenanteile Polyethylenterephthalat und 0,1 bis 20 Massenanteile, bevorzugt 0,1 bis 5 Massenanteile, Talkum enthält. Vorzugsweise werden die Schritte (c) und (d) in oder mit einem Kühlfluid durchgeführt.

In einer alternativen oder bevorzugten Ausführungsform werden vor dem Verfahrensschritt (e) die granulierten Polymerschaumpartikel in einem Autoklav unter geeignetem Druck über eine geeignete Zeit mit Treibmittel beaufschlagt. Die entsprechenden Bedingungen kann ein Fachmann durch angemessenes Experimentieren ermitteln.

Vorzugsweise wird im erfindungsgemäßen Verfahren vor Verfahrensschritt (e) als Treibmittel **Kohlendioxid** eingesetzt. Die erfindungsgemäßen PBT/PET basierten Polymerschaumpartikel enthalten deshalb in bevorzugter Ausführungsform als Treibmittel nur Kohlendioxid. Erfindungsgemäß wird deshalb das einzusetzende PET in Kombination mit Kohlendioxid als Treibmittel eingesetzt, bevorzugt in weiterer Kombination mit Talkum.

In einer weiteren bevorzugten Ausführungsform werden in den Polymerschaumpartikeln aber auch im erfindungsgemäßen Verfahren sowie bei der erfindungsgemäßen Verwendung des PET auf 100 Massenanteile PBT zusätzlich zum Talkum 0,1 bis 20 Massenanteile, besonders bevorzugt 0,1 bis 5 Massenanteile, wenigstens eines **von Talkum verschiedenen Additivs** eingesetzt.

Bevorzugte und von Talkum verschiedene Additive werden ausgewählt aus der Reihe UV-Stabilisatoren, Thermostabilisatoren, Gleit- und Entformungsmittel, Füll- und Verstärkungsstoffe, Nukleierungsmittel verschieden von Talkum, Laserabsorber, di- oder mehrfunktionelle verzweigend oder kettenverlängernd wirkende Additive, Hydrolysestabilisatoren, Antistatika, Emulgatoren, Weichmacher, Verarbeitungshilfsmittel, Fließhilfsmittel, Elastomermodifikatoren und Farbmittel. Diese Additive können jeweils alleine, oder in Mischung bzw. in Form von Masterbatchen eingesetzt werden.

Bevorzugt als Additiv und von Talkum verschiedene Gleit- und Entformungsmittel werden ausgewählt aus der Reihe der langkettigen Fettsäuren, der Salze langkettiger Fettsäuren, der Esterderivate langkettiger Fettsäuren sowie Montanwachse. Bevorzugte langkettige Fettsäuren sind Stearinsäure oder Behensäure. Bevorzugte Salze der langkettigen Fettsäuren sind Ca- oder Zn-Stearat. Bevorzugte Esterderivate langkettiger Fettsäuren sind solche auf Basis von Pentaerythritol, insbesondere C₁₆-C₁₈-Fettsäureester des Pentaerythritols [CAS Nr. 68604-44-4] oder [CAS Nr. 85116-93-4]. Montanwachse im Sinne der vorliegenden Erfindung sind Mischungen aus geradkettigen, gesättigten Carbonsäuren mit Kettenlängen von 28 bis 32 C Atomen. Erfindungsgemäß besonders bevorzugt werden Gleit- und/oder Entformungsmittel aus der Gruppe der Ester gesättigter oder ungesättigter aliphatischer Carbonsäuren mit 8 bis 40 C-Atomen mit aliphatischen gesättigten Alkoholen mit 2 bis 40 C-Atomen sowie Metallsalze gesättigter oder ungesättigter aliphatischer Carbonsäuren mit 8 bis 40 C-Atomen eingesetzt, wobei Pentaerythritoltetrastearat [CAS Nr. 115-83-3], Calciumstearat [CAS Nr. 1592-23-0] und/oder Ethylenglycoldimontanat, hier insbesondere Licowax^{®} E [CAS-Nr. 74388-22-0] der Fa. Clariant, Muttenz, Basel ganz besonders bevorzugt ist und Pentaerythritoltetrastearat z. B. erhältlich als Loxiol^{®} P861 der Fa. Emery Oleochemicals GmbH, Düsseldorf, Deutschland insbesondere ganz besonders bevorzugt ist.

Bevorzugt als Additiv und von Talkum verschiedene Farbmittel sind organische Pigmente, bevorzugt Phthalocyanine, Chinacridone, Perylene sowie Farbstoffe, bevorzugt Nigrosin oder Anthrachinone, weiterhin anorganische Pigmente, insbesondere Titandioxid und/oder Bariumsulfat, Ultramarinblau, Eisenoxid, Zinksulfid oder Ruß.

Bevorzugt als Additiv und von Talkum verschiedene Weichmacher sind Phthalsäuredioctylester, Phthalsäuredibenzylester, Phthalsäurebutylbenzylester, Kohlenwasserstofföle oder N-(n-Butyl)benzolsulfonamid.

Bevorzugt als Additiv einzusetzende und von Talkum verschiedene Nukleierungsmittel sind Natrium- oder Kalium-Salze des Acetats, Salicylats, Steareats, Saccharinats, sowie teilverseifte Montanwachse und lonomeren.

Bevorzugt als Additiv und von Talkum verschiedene Thermostabilisatoren sind ausgewählt aus der Gruppe der sterisch gehinderten Phenole und aliphatisch oder aromatisch substituierten Phosphite sowie verschieden substituierte Vertreter dieser Gruppen. Unter den sterisch gehinderten Phenolen werden bevorzugt solche mit mindestens einem 3-Tert.-butyl-4-hydroxy-5-methylphenyl- und/oder mindestens einem 3,5-Di-(tert.-butyl-4-hydroxyphenyl)-Baustein eingesetzt, wobei 1,6-Hexandiol-bis[3-(3,5-di-tert.-butyl-4-hydroxyphenyl)-propionat] [CAS-Nr. 35074-77-2] (Irganox^{®} 259 der Fa. BASF SE, Ludwigshafen, Deutschland), Pentaerythril-tetrakis-[3-(3,5-di-tert.-butyl-4-hydroxyphenyl)-propionat] [CAS-Nr. 6683-19-8] (Irganox^{®} 1010 der Fa. BASF SE) und 3,9-Bis[2-[3-(3-tert-butyl-4-hydroxy-5-methylphenyl)propionyloxy]-1,1-dimethylethyl]-2,4,8,10-tetraoxaspiro[5.5]undecane [CAS-Nr. 90498-90-1] (ADK Stab^{®} AO 80) besonders bevorzugt sind. ADK Stab^{®} AO 80 ist ein Handelsprodukt der Fa. Adeka-Palmerole SAS, Mulhouse, Frankreich.

Unter den aliphatisch oder aromatisch substituierten Phosphiten wird bevorzugt Tetrakis(2,4-di-tert-butylphenyl)-4,4-biphenyldiphosphonit [CAS Nr. 119345-01-6], das z. B. von der Firma Clariant International Ltd, Muttenz, Schweiz als Hostanox^{®} P-EPQ angeboten wird, Bis(2,4-dicumylphenyl)-pentaerythritol-diphosphit [CAS Nr. 154862-43-8], das z. B. von der Fa. Dover Chemical Corp., Dover, USA unter dem Handelsnamen Doverphos^{®} S9228 angeboten wird, und/oder Tetrakis(2,4-di-tert-butylphenyl)-1,1-biphenyl-4,4'-diylbisphosphonit [CAS Nr. 38613-77-3] eingesetzt.

Bevorzugt als Additiv und von Talkum verschiedene Elastomermodifikatoren sind ein oder mehrere Pfropfpolymerisate von wenigstens eines Vinylmonomeren D.1 und einer oder mehrerer Pfropfgrundlagen D.2 mit Glasübergangstemperaturen < 10°C, vorzugsweise < 0°C, besonders bevorzugt < -20°C, wobei vorzugsweise auf 5 bis 95 Gew.-%, besonders bevorzugt in Mengen von 30 bis 90 Gew.-%, der D.1, 95 bis 5 Gew.-%, besonders bevorzugt 70 bis 10 Gew.-%, von D.2 eingesetzt werden und die Gewichtsprozente sich auf 100 Gewichtsprozent Elastomermodifikator beziehen. Bevorzugte Ausführungen erfindungsgemäß einzusetzender Elastomermodifikatoren werden in EP 3 239 228 A1 aufgeführt, deren Inhalt von der vorliegenden Erfindung vollumfänglich umfasst wird.

Bevorzugt als Additiv einzusetzende und von Talkum verschiedene Füll- oder Verstärkungsstoffe ist wenigstens eines aus der Reihe Glimmer, Silikat, Quarz, Quarzmehl, Titandioxid, amorphe Kieselsäuren, Bariumsulfat, Glaskugeln, Glasmehl und/oder faserförmige Füllstoffe und/oder Verstärkungsstoffe auf der Basis von Glasfasern oder Kohlenstofffasern eingesetzt.

Besonders bevorzugt werden als Füll- oder Verstärkungsstoff Glaskugeln oder Glasmehl eingesetzt, ganz besonders bevorzugt Glaskugeln. Im Falle des Einsatzes von Glaskugeln beziehen sich Angaben zur Teilchengrößenverteilung bzw. der Teilchengrößen auf sogenannte oberflächenbasierte Teilchengrößen, jeweils vor Einarbeitung in die thermoplastische Formmasse. Hierbei werden die Durchmesser der Flächen der jeweiligen Glaspartikel mit den Flächen imaginärer sphärischer Teilchen (Kugeln) in Beziehung gesetzt. Dies geschieht mit einem nach dem Prinzip der Laserverdunklung arbeitenden Teilchengrößenanalysator der Fa. Ankersmid (Eye Tech^{®} mit der darin enthaltender EyeTech^{®}-Software und ACM-104 Messzelle, Ankersmid Lab, Oosterhout, Niederlande).

Die als Additiv und von Talkum verschiedenen einzusetzenden Füll- und/oder Verstärkungsstoffe können bedingt durch die Verarbeitung zur Formmasse bzw. zu einer erfindungsgemäßen Partikelschaumstruktur in diesen einen kleineren d97- bzw. d50-Wert aufweisen, als die ursprünglich eingesetzten Füll- bzw. Verstärkungsstoffe. Bezüglich der d50 und d97-Werte in dieser Anmeldung, ihrer Bestimmung und ihrer Bedeutung sei auf Chemie Ingenieur Technik (72) S. 273-276, 3/2000, Wiley-VCH Verlags GmbH, Weinheim, 2000 verwiesen, wonach der d50-Wert diejenige Partikelgröße ist, unterhalb derer 50% der Partikelmenge liegen (Medianwert) und der d97-Wert diejenige Partikelgröße ist, unterhalb derer 97% der Partikelmenge liegen.

Die als Additiv und von Talkum verschiedenen einzusetzenden Füll- und Verstärkungsstoffe können einzeln oder als Mischung aus zwei oder mehr unterschiedlichen Füllstoffen und/oder Verstärkungsstoffen eingesetzt werden. Der als Additiv einzusetzende Füll- und/oder Verstärkungsstoff kann in einer bevorzugten Ausführungsform oberflächenmodifiziert sein, besonders bevorzugt mit einem Haftvermittler bzw. Haftvermittlersystem, insbesondere bevorzugt auf Silan- oder Epoxidbasis. Die Vorbehandlung ist jedoch nicht unbedingt erforderlich. Bevorzugte Ausführungen erfindungsgemäß einzusetzender Haftvermittler werden ebenfalls in EP 3 239 228 A1 genannt.

Besonders bevorzugt wird zusätzlich zum Talkum als Additiv **Tetrakis(2,4-di-tert-butylphenyl)-4,4-biphenyldiphosphonit (Hostanox^{®} P-EPQ)** eingesetzt.

Bevorzugter Gegenstand der vorliegenden Erfindung ist ein **Verfahren zur Herstellung von Polymerschaumpartikeln,** vorzugsweise mit einer Dichte im Bereich von 50 bis 700 kg/m³, indem man Pulver oder Granulat einer Polymermatrix
(a) in einen Extruder unter Ausschluss von Vernetzungsmitteln und/oder Kettenverlängerungsmitteln einsetzt und plastifiziert und homogenisiert,
(b) ein Treibmittel ausgewählt aus der Gruppe Luft, Stickstoff und Kohlendioxid in die plastifizierte Polymermatrix in einen Extruder eindispergiert,
(c) die mit dem Treibmittel versetzte, plastifizierte Polymermatrix aus dem Extruder durch eine Extruderdüse austrägt,
(d) den extrudierten und mit dem Treibmittel versetzten Polymermatrixstrang stromab der Extruderdüse unter Bildung expandierbarer oder zumindest teilweise expandierter Polymerschaumpartikel granuliert, und
(e) die Polymerschaumpartikel expandiert, vorzugsweise thermisch expandiert, insbesondere in einem Infrarotdurchlaufofen expandiert,
wobei die Polymermatrix auf 100 Massenanteile Polylbutylenterephthalat 25 bis 320 Massenanteile Polyethylenterephthalat, 0,1 bis 20 Massenanteile, bevorzugt 0,1 bis 5 Massenanteile, Talkum und 0,1 bis 20 Massenanteile, bevorzugt 0,1 bis 5 Massenanteile, **Tetrakis(2,4-di-tert-butylphenyl)-4,4-biphenyldiphosphonit** enthält. Vorzugsweise werden die Schritte (c) und (d) in oder mit einem Kühlfluid durchgeführt.

Bevorzugter Gegenstand der Erfindung ist aber auch ein Verfahren zur **Verbreiterung des Verarbeitungsfensters von PBT** als Matrixpolymer in der Herstellung von thermoplastischen, expandierbaren oder zumindest teilweise expandierten Polymerschaumpartikeln indem der Aufschmelzbereich von reinem PBT von 225 +/- 2°C auf den Bereich von 223 bis 255°C erweitert wird, wobei auf 100 Massenanteile Polylbutylenterephthalat 25 bis 320 Massenanteile Polyethylenterephthalat, 0,1 bis 20 Massenanteile, bevorzugt 0,1 bis 5 Massenanteile, Talkum und 0,1 bis 20 Massenanteile, bevorzugt 0,1 bis 5 Massenanteile, **Tetrakis(2,4-di-tert-butylphenyl)-4,4-biphenyldiphosphonit** eingesetzt werden.

Schließlich ist ein bevorzugter Gegenstand der vorliegenden Erfindung die **Verwendung von Polyethylenterephthalat zur Verbreiterung des Verarbeitungsfensters** von Polybutylenterephthalat als Matrixpolymer enthaltenden expandierbaren oder zumindest teilweise expandierten Polymerschaumpartikeln beim Formschäumen von 225°C +/-2°C auf den Bereich von 223 bis 255°C **und/oder zur Erhöhung der Schmelzviskosität** von als Matrixpolymer für expandierbare oder zumindest teilweise expandierte Polymerschaumpartikel beim Formschäumen einzusetzendem Polybutylenterephthalat, indem auf 100 Massenanteile Polylbutylenterephthalat 25 bis 320 Massenanteile Polyethylenterephthalat und 0,1 bis 20 Massenanteile, bevorzugt 0,1 bis 5 Massenanteile, Talkum und 0,1 bis 20 Massenanteile, bevorzugt 0,1 bis 5 Massenanteile, **Tetrakis(2,4-di-tert-butylphenyl)-4,4-biphenyldiphosphonit** eingesetzt werden.

### Polybutylenterephthalat (PBT)

Das erfindungsgemäß einzusetzende Polybutylenterephthalat (PBT) wird aus Terephthalsäure oder ihren reaktionsfähigen Derivaten und Butandiol nach bekannten Methoden hergestellt (Kunststoff-Handbuch, Bd. VIII, S. 695 ff, Karl Hanser Verlag, München 1973). Bevorzugt enthält das einzusetzende PBT mindestens 80 Mol-%, vorzugsweise mindestens 90 Mol-%, Terephthalsäurereste bezogen auf die Dicarbonsäure.

Das erfindungsgemäß als Basispolymer einzusetzende PBT kann in einer Ausführungsform neben Terephthalsäurerestern bis zu 20 Mol-% Reste anderer aromatischer Dicarbonsäuren mit 8 bis 14 C-Atomen oder Reste aliphatischer Dicarbonsäuren mit 4 bis 12 C-Atomen enthalten, insbesondere Reste von Phthalsäure, Isophthalsäure, Naphthalin-2,6-dicarbonsäure, 4,4'-Diphenyldicarbonsäure, Bernsteinsäure, Adipinsäure, Sebacinsäure, Azelainsäure, Cyclohexandiessigsäure, Cyclohexandicarbonsäure, 2,5-Furandicarbonsäure.

Das erfindungsgemäß als Basispolymer einzusetzende PBT kann in einer Ausführungsform neben Butandiol bis zu 20 Mol-% andere aliphatische Diole mit 3 bis 12 C-Atomen oder bis zu 20 Mol -% cycloaliphatische Diole mit 6 bis 21 C-Atomen enthalten, bevorzugt Reste von Propandiol-1,3, 2-Ethylpropandiol-1,3, Neopentylglykol, Pentan-diol-1,5, Hexandiol-1.6, 1,4-Cyclohexandimethanol, 3-Methylpentandiol-2,4, 2-Methylpentandiol-2,4, 2,2,4-Trimethylpentandiol-1,3, 2,2,4-Trimethylpentandiol-1,5, 2-Ethylhexandiol-1,3, 2,2-Diethylpropandiol-1,3, Hexandiol-2,5, 1,4-Di-(β-hydroxyethoxy)-benzol, 2,2-Bis-(4-hydroxycyclohexyl)-propan, 2,4-Dihydroxy-1,1,3,3-tetramethyl-cyclobutan, 2,2-bis-(3-βhydroxyethoxyphenyl)-propan und 2,2-bis-(4-hydroxypropoxyphenyl)-propan.

Bevorzugt als Basispolymer einzusetzendes PBT hat eine nach EN-ISO 1628/5 zu bestimmende intrinsische Viskosität im Bereich von 30 bis 150 cm³/g, besonders bevorzugt im Bereich von 40 bis 130 cm³/g, ganz besonders bevorzugt im Bereich von 50 bis 100 cm³/g, jeweils gemessen im Ubbelohde Viskosimeter in Phenol/o-Dichlorbenzol (1:1 Gew.-Teile) bei 25°C. Die intrinsische Viskosität *iV*, auch als Staudinger-Index oder Grenzviskosität bezeichnet, ist nach der Mark-Houwink-Gleichung proportional zur mittleren Molekülmasse und ist die Extrapolation der Viskositätszahl VN für den Fall verschwindender Polymerkonzentrationen. Sie kann aus Messreihen oder durch die Verwendung geeigneter Näherungsverfahren (z. B. Billmeyer) abgeschätzt werden. Die VN [ml/g] erhält man aus der Messung der Lösungsviskosität im Kapillar-Viskosimeter, beispielsweise Ubbelohde-Viskosimeter. Die Lösungsviskosität ist ein Maß für das mittlere Molekulargewicht eines Kunststoffs. Die Bestimmung erfolgt an gelöstem Polymer, wobei unterschiedliche Lösungsmittel, vorzugsweise Ameisensäure, m-Kresol, Tetrachlorethan, Phenol, 1,2-Dichlorbenzol, etc., und Konzentrationen zum Einsatz kommen. Durch die Viskositätszahl VN ist eine Kontrolle der Verarbeitungs- und Gebrauchseigenschaften von Kunststoffen möglich. Eine thermische Beanspruchung des Polymers, Alterungsvorgänge oder das Einwirken von Chemikalien, Bewitterung und Licht können durch vergleichende Messungen untersucht werden. Siehe hierzu auch: **http://de.wikipedia.org/wiki/Viskosimetrie** und **http://de.wikipedia.org/wiki/Mark-Houwink-Gleichung.**

Erfindungsgemäß als Basispolymer bevorzugt einzusetzendes PBT kann als Pocan^{®} B 1300 von der Lanxess Deutschland GmbH, Köln, bezogen werden.

### Polyethylenterephthalat (PET)

Polyethylenterephthalat [CAS Nr. 25038-59-9] ist ein durch Polykondensation hergestellter thermoplastischer Kunststoff aus der Familie der Polyester. PET hat vielfältige Einsatzbereiche und wird unter anderem zur Herstellung von Kunststoffflaschen, Folien und Textilfasern verwendet. Seine Dichte liegt bei 1,38 g/cm³, sein Schmelzpunkt liegt bei 260°C. PET ist in Wasser praktisch unlöslich und hat eine Glastemperatur von 70°C. Weitere technische Daten siehe: **https://de.wikipedia.org/wiki/Polyethylenterephthalat.**

Erfindungsgemäß bevorzugt einzusetzendes PET hat eine intrinsische Viskosität nach EN-ISO 1628/5 im Bereich von 30 bis 150 cm³/g, besonders bevorzugt im Bereich von 40 bis 130 cm³/g, ganz besonders bevorzugt im Bereich von 50 bis 100 cm³/g, jeweils gemessen im Ubbelohde Viskosimeter in Phenol/o-Dichlorbenzol (1:1 Gew.-Teile) bei 25°C. Die intrinsische Viskosität *iV*, auch als Staudinger-Index oder Grenzviskosität bezeichnet, ist nach der Mark-Houwink-Gleichung proportional zur mittleren Molekülmasse und ist die Extrapolation der Viskositätszahl VN für den Fall verschwindender Polymerkonzentrationen. Sie kann aus Messreihen oder durch die Verwendung geeigneter Näherungsverfahren (z. B. Billmeyer) abgeschätzt werden. Die VN [ml/g] erhält man aus der Messung der Lösungsviskosität im Kapillar-Viskosimeter, beispielsweise Ubbelohde-Viskosimeter. Die Lösungsviskosität ist ein Maß für das mittlere Molekulargewicht eines Kunststoffs. Die Bestimmung erfolgt an gelöstem Polymer, wobei unterschiedliche Lösungsmittel (Ameisensäure, m-Kresol, Tetrachlorethan, Phenol, 1,2-Dichlorbenzol, etc.) und Konzentrationen zum Einsatz kommen. Durch die Viskositätszahl VN ist eine Kontrolle der Verarbeitungs- und Gebrauchseigenschaften von Kunststoffen möglich. Eine thermische Beanspruchung des Polymers, Alterungsvorgänge oder das Einwirken von Chemikalien, Bewitterung und Licht können durch vergleichende Messungen untersucht werden. Siehe hierzu auch: **http://de.wikipedia.org/wiki/Viskosimetrie** und **"http://de.wikipedia.org/wiki/Mark-Houwink-Gleichung".**

Erfindungsgemäß einzusetzendes PET kann als Lighter C88 von Equipolymers s.r.l., Amsterdam, Niederlande bezogen werden.

### Verfahren zur Herstellung von Polymerschaumpartikeln

Als vorteilhaft erweist es sich, dass das erfindungsgemäße Verfahren unter Ausschluss jeglicher Vernetzungs- und/oder Kettenverlängerungsmittel wie Joncryl^{®} ADR 4468 einschließlich solcher auf der Basis von Epoxiden durchgeführt werden kann, so dass nicht nur der Einsatz solcher umwelt- und gesundheitsschädlichen Substanzen entbehrlich gemacht wird, sondern die so erzeugten PBT basierten Polymerschaumpartikel insbesondere eine Polymermatrix aufweisen, welche aus artgleichen Polyalkylenterephthalaten gebildet wird.

Das Vorschäumen kann vorzugsweise in einem Autoklavprozess oder mittels Strangextrusion einer gasbeladenen Schmelze erfolgen.

In einer alternativen oder auch bevorzugten Ausführungsform wird vor dem Verfahrensschritt (e) das Granulat expandierter Polymerschaumpartikel im Autoklav unter Druck von 5 bis 60 bar über eine Zeit von 2 bis 60h mit Treibmittel beaufschlagt.

Vorzugsweise wird das PBT in Form eines mit PET geblendeten Masterbatches gemäß Schritt (a) im Extruder eingesetzt und gemeinsam unter Ausschluss von Vernetzungs- und/oder Kettenverlängerungsmitteln plastifiziert und homogenisiert, wobei gemäß Verfahrensschritt (b) wenigstens ein Treibmittel zugesetzt und in dem Extruder in die plastifizierte Polymermatrix des PBT mit dem als Blend-Partner eingesetzten PET eindispergiert wird. Sodann wird die Polymermatrix aus dem mit Treibmittel versetzten Blend gemäß Verfahrensschritt (c) durch wenigstens eine Extruderdüse aus dem Extruder ausgetragen, wonach der extrudierte und mit dem wenigstens einem Treibmittel versetzte Polymerstrang gemäß Verfahrensschritt (d) stromab der Extruderdüse unter Bildung der Polymerschaumpartikel granuliert wird. Vorzugsweise werden die Verfahrensschritte (c) und (d) in oder mit einem Kühlfluid durchgeführt. Das eingesetzte Kühlfluid steht in einer weiteren Ausführungsform unter einem gegenüber Umgebungsdruck erhöhten Druck.

Im Verfahrensschritt (e) wird das gegebenenfalls mit Treibmittel versetzte Granulat expandiert, vorzugsweise thermisch expandiert, insbesondere ein einem Infrarotdurchlaufofen expandiert.

Das wenigstens eine Treibmittel, insbesondere Kohlendioxid, kann zweckmäßigerweise in einem Anteil von etwa 1 Massen-% bis etwa 20 Massen-%, insbesondere von etwa 2 Massen-% bis etwa 15 Massen-%, vorzugsweise von etwa 3 Massen-% bis etwa 10 Massen-%, bezogen auf die Masse der Polymermatrix zugesetzt werden.

Erfindungsgemäß bevorzugt wird der PBT basierten und mit PET geblendeten Polymermatrix Talkum zugesetzt. Talkum (Magnesiumsilikathydrat) sorgt als feinpartikuläres Nukleierungsmittel für eine gute Bläschenbildung beim Expandieren bzw. Aufschäumen und auch für eine hohe Kristallinität der mit PET geblendeten PBT Polymermatrix, sowie in einer späteren Anwendung für eine hohe Wärmeformbeständigkeit. Besonders bevorzugt wird Talkum [CAS-Nr.14807-96-6] in Form von mikrokristallinem Talkum eingesetzt. Talkum, auch als Talk bezeichnet, ist ein Schichtsilikat mit der chemischen Zusammensetzung Mg₃[Si₄O₁₀(OH)₂], das je nach Modifikation als Talk-1A im triklinen oder als Talk-2M im monoklinen Kristallsystem kristallisiert (**http://de.wikipedia.org/wiki/Talkum**). Das einzusetzende Talkum kann beispielsweise als Mistron^{®} R10 von Imerys Talc Group, Toulouse, Frankreich (Rio Tinto Group) bezogen werden.

Während es sich bei dem vorzugsweise in Verfahrensschritt (c) und (d) des erfindungsgemäßen Verfahrens eingesetzten Kühlfluid grundsätzlich auch um ein Gas bzw. Gasgemisch handeln kann, kann in vorteilhafter Ausgestaltung vorgesehen sein, dass als Kühlfluid eine Flüssigkeit, insbesondere ein wässriges Medium, wie beispielsweise Wasser, eingesetzt wird, welches aufgrund einer verhältnismäßig hohen Wärmekapazität für eine hohe Abkühlrate der gemäß Verfahrensschritt (d) erzeugten expandierbaren Polymerschaumpartikel zu sorgen vermag.

Je nach gewünschter Schüttdichte der gemäß Verfahrensschritt (d) erzeugten expandierbaren Polymerschaumpartikel auf der Basis von Polylbutylenterephthalat kann vorgesehen sein, dass das Kühlfluid unter einem Druck von
- wenigstens etwa 1,5 bar, insbesondere von wenigstens etwa 2 bar, vorzugsweise von wenigstens etwa 5 bar; und/oder
- höchstens etwa 30 bar, insbesondere von höchstens etwa 25 bar, vorzugsweise von wenigstens etwa 20 bar,
gehalten wird. Dabei vermag beispielsweise ein verhältnismäßig hoher Druck des Kühlfluids von mindestens etwa 5 bar einem Expandieren bzw. Aufschäumen der Polymerschaumpartikel anlässlich ihrer Granulierung gemäß Verfahrensschritt (d) entgegenzuwirken. Aufgrund dessen, dass das Kühlfluid die Treibmittel enthaltenden Polymerschaumpartikel relativ schnell unter deren auf den Blend aus PBT/PET bezogenen Glastemperatur abkühlt, wird ein Entgasen verhindert und in hohem Maße treibmittelbeladene, expandierbare Polymerschaumpartikel erzeugt. Diese besitzen eine relativ hohe Schüttdichte und können allein durch eine bloße Temperaturbehandlung zu expandierten Polymerschaumpartikeln mit sehr geringen Schüttdichten und folglich sehr großem Porenvolumen verschäumt werden. Wird der Druck des Kühlfluids hingegen auf einen Wert von bis zu etwa 5 bar eingestellt, so kann anlässlich des Granulierens gemäß Verfahrensschritt (d) bereits ein zumindest teilweises Expandieren bzw. Aufschäumen der Polymerschaumpartikel eingeleitet werden, so dass sich gegenüber einem höheren Druck des Kühlfluids geringere Schüttdichten der erhaltenen, teilweise aufgeschäumten, aber gleichwohl noch weiter expandierbaren Polymerschaumpartikel ergeben. Letzteres kann sich vorzugsweise dann anbieten, wenn die zumindest teilweise aufgeschäumten Polymerschaumpartikel nicht über einen längeren Zeitraum zwischengelagert oder weitertransportiert, sondern direkt oder zeitnah weiterverarbeitet werden sollen.

Das Kühlfluid kann zu den genannten Zwecken vorzugsweise auf einer Temperatur von
- wenigstens etwa 0°C, insbesondere von wenigstens etwa 5°C, vorzugsweise von wenigstens etwa 10°C; und/oder
- höchstens etwa 90°C, insbesondere von höchstens etwa 70°C, vorzugsweise von höchstens etwa 50°C, gehalten werden.

Das in einer alternativen oder bevorzugten Ausführungsform dieser Erfindung angewandte Beaufschlagen des Granulats vor Verfahrensschritt (e) mit wenigstens einem Treibmittel zur Herstellung expandierter PBT basierter Polymerschaumpartikel erfolgt in einem Autoklav unter Druck. Hierbei werden vorzugsweise Drücke im Bereich von 5 bis 60 bar angewandt. Vorzugsweise erfolgt die Druckbeaufschlagung über einen Zeitraum von 2 bis 60h, der von der jeweils nach Ansatz gewünschten Konzentration des Treibmittels im Granulat und der Temperatur im Autoklaven abhängig ist. Vorzugsweise wird wenigstens ein Treibmittel aus der Gruppe Luft, Stickstoff und Kohlendioxid angewandt, besonders bevorzugt mit Kohlendioxid.

Nachdem das Granulat genügend Treibmittel, insbesondere Kohlendioxid, aufgenommen hat, wird es dem Autoklav entnommen und im Verfahrensschritt (e) expandiert, vorzugsweise thermisch expandiert. Insbesondere bevorzugt erfolgt die Expansion in einem Infrarotdurchlaufofen. Während der Expansion nimmt das mit Treibmittel beaufschlagte Granulat durch Strahlungsabsorption in kurzer Zeit die Temperatur an, bei der das Treibmittel, insbesondere Kohlendioxid, die erweichte PBT und mittels PET modifizierte Polymermatrix wie einen Hefeteig aufgehen lässt. Was gemäß dem Stand der Technik, insbesondere bei Einsatz von Dampf, wenige Minuten dauert und oftmals einer nachfolgenden Konditionierung bedarf, erfolgt erfindungsgemäß vollkommen trocken innerhalb weniger Sekunden. Die Durchlaufgeschwindigkeit durch den Expansionsprozess, insbesondere im Infrarotdurchlaufofen sowie die einzubringende Energie, insbesondere die Infrarotstrahlerleistung im Infrarotdurchlaufofen, müssen dem mit PET geblendeten PBT Granulat und dessen Einsatzmenge entsprechend angepasst werden. Während des Expansionsvorgangs, insbesondere während des Durchlaufens durch den Infrarotdurchlaufofen, wird das erfindungsgemäß mit PET geblendete PBT Granulat bis nahe an dessen Erweichungstemperatur erwärmt, wodurch das eingelagerte Treibmittel lokal an Nukleierungspunkten expandieren kann und lokal Zellen bildet, die zusammen eine Schaumstruktur erzeugen. Das Zellenwachstum wird von der Druckdifferenz zwischen dem Inneren einer Zelle und dem die Zelle umgebenden Medium, von der Diffusion des Treibgases in bestehende Zellen, vom Kühleffekt durch die Phasenumwandlung des Treibmittels und von den viskoelastischen Eigenschaften des PET geblendeten bzw. modifizierten PBTs in Abhängigkeit von der Massetemperatur bestimmt.

Der Zellwachstumsprozess wird prinzipiell in der Dissertation von Dipl. Ing. A. Braun "Verfahrensentwicklung von physikalisch geschäumten Polypropylenplatten für den Einsatz als Kernmaterial von Sandwichverbunden", Montanuniversität Leoben, Januar 2011 im Kapitel 2.5.6 beschrieben. Demnach wird das Zellenwachstum in einem polymeren Schaum maßgeblich durch den Gasaustausch zwischen Schmelze und Zelle, sowie durch die viskoelastischen Eigenschaften des Polymers bestimmt. Während der Gasaustausch auf die zuvor besprochenen Sorptions- und Diffusionsvorgänge zurückzuführen ist, werden die viskoelastischen Eigenschaften hauptsächlich durch die Wahl des Polymers und die Temperaturführung im Prozess beeinflusst. Die Polymerschmelze wird in den Zellwänden einer biaxialen Dehnbeanspruchung unterzogen. Wenn die Schmelzfestigkeit der Polymerschmelze zu gering ist, kann es zu einem Aufreißen der Zellwände und somit zur Vereinigung benachbarter Zellen kommen. Erfindungsgemäß vorteilhaft für das Zellwachstum und damit das gleichmäßige Aufschäumen ist die im niedrigen Scherviskositätsbereich durch das eingesetzte PET erzielte höhere Schmelzviskosität des PBT. Die mittels PET erzielte höhere Schmelzviskosität des PBT reduziert das Zusammenwachsen von einzelnen Zellen zu größeren Zellen. Dadurch bleiben die einzelnen Zellen kleiner und die Struktur einer Schaumperle ist gleichmäßig.

Der Schäumgrad hängt dabei von der in den Schaumperlen eingelagerten Treibmittel- /Gasmenge, von der Durchlaufzeit durch den Expansionsprozess im Verfahrensschritt (e), insbesondere von der Durchlaufzeit durch den Infrarotdurchlaufofen und von dessen Strahlerleistung, ab. Nach dem Durchlaufen des Expansionsvorgangs, insbesondere nach dem Durchlaufen des Infrarotdurchlaufofens, kann das Granulat als Polymerschaumpartikel vorliegend im Formschäumprozess weiterverarbeitet werden.

Damit kann die gewünschte Schüttdichte der Polymerschaumpartikel in einfacher Weise in relativ breiten Intervallen von vorzugsweise größer 400 g/l bis kleiner 100 g/l auf den gewünschten Wert eingestellt werden, indem die Dauer der Wärmebehandlung und/oder der Anteil an erfindungsgemäß einzusetzendem Treibmittel variiert wird. Die Wärmebehandlung zum Vorschäumen der Polymerschaumpartikel auf der Basis von PBT kann dabei in praktisch beliebiger Weise erfolgen. Vorzugsweise erfolgt die Wärmebehandlung zum Vorschäumen mittels entsprechend temperiertem Wasserdampf, Luft, Wasser oder anderen Wärmeübertragungsfluiden, durch Exponieren der Polymerschaumpartikel mit elektromagnetischer Strahlung, vorzugsweise im Infrarotbereich mittels einer Wärmequelle, mit Mikrowellen-, Radiofrequenzstrahlung oder dergleichen.

Selbstverständlich ist es anlässlich des vorbeschriebenen Vorschäumens der gemäß Verfahrensschritt (d) erhaltenen expandierbaren Polymerschaumpartikel auf der Basis von PBT - seien sie je nach eingestelltem Druck des Kühlfluids noch im Wesentlichen kompakt, oder seien die bereits teilweise expandiert bzw. aufgeschäumt - bei erhöhter Temperatur grundsätzlich möglich, hierbei einen gegenüber Umgebungsdruck erhöhten oder auch verminderten Druck einzustellen. Jedoch können die gemäß Verfahrensschritt (d) erhaltenen Polymerschaumpartikel aus den genannten Gründen in einfacher und kostengünstiger Weise insbesondere im Wesentlichen bei Umgebungsdruck vorgeschäumt werden, um die vorbeschriebenen, sehr geringen Schüttdichten bzw. die sehr hohen Porenvolumina zu erzielen.

Im Rahmen der vorliegenden Erfindung wird vorzugsweise PBT basiertes Granulat enthaltend PET und Talkum sowie gegebenenfalls wenigstens ein weiteres von Talkum verschiedenes Additiv, insbesondere Hostanox^{®} P-EPQ, mit einem Durchmesser im Bereich von 0,1 bis 5 mm und einer Länge im Bereich von 0,1 bis10 mm in einem Autoklaven bei einem Druck im Bereich von 5 bis 100 bar über einen Zeitraum im Bereich von 1 bis 250 h mit Treibmittel, insbesondere CO₂, beaufschlagt. Vorzugsweise hat das einzusetzende Granulat einen Durchmesser im Bereich von 0,5 bis 2 mm Durchmesser. Vorzugsweise hat das einzusetzende Granulat eine Länge im Bereich von 0,5 bis 3 mm. Vorzugsweise wird der Autoklav mit einem Druck im Bereich von 10 bis 70 bar betrieben. Vorzugsweise erfolgt die Beaufschlagung mit CO₂ über einen Zeitraum im Bereich von 5 bis 50 h.

Anschließend hat es sich bewährt, das erfindungsgemäß mit Treibmittel, insbesondere CO₂, beaufschlagte Granulat durch einen Infrarotdurchlaufofen (einzügiger Infrarotdurchlaufofen SL der Fox Velution GmbH) mit einer Strahlerleistung im Bereich von 90% (hier: ca. 20 kW) bei einer am Ausgang des Infrarotdurchlaufofen gemessenen Temperatur im Bereich von 220 bis 255°C (im Rahmen der vorliegenden Erfindung wurden Referenzbandtemperaturen optisch gemessen, weil im Ofen selbst an unterschiedlichen Positionen Temperaturen von 50°C bis 950°C herrschen) mit einer Durchlaufgeschwindigkeit im Bereich von 300 bis 1400 mm/s, vorzugsweise mit einer Durchlaufgeschwindigkeit im Bereich von 500 bis 800 mm/s zu führen. Abschließend werden die Partikel für 24 Stunden bei Raumtemperatur stabilisiert.

Während die mittels des erfindungsgemäßen Verfahrens hergestellten expandierbaren und/oder zumindest teilweise expandierten Polymerschaumpartikel auf der Basis von mit PET geblendetem PBT, wie bereits beschrieben, in breiten Grenzen variable Schüttdichten besitzen können, kann in vorteilhafter Ausgestaltung vorgesehen sein, dass sie
- einen Anteil an PBT in der Polymermatrix von wenigstens 49 Mass.-%, insbesondere von wenigstens 60 Mass.-%, vorzugsweise von maximal 75 Mass.-%;
- **im kompaktierten Zustand** gemäß Verfahrensschritt (d) (also vor einem etwaigen Vorschäumen) eine Schüttdichte von wenigstens 800 g/l, - **nach Vorschäumen** bei einer Temperatur im Bereich von 220°C bis 260°C über einen Zeitraum von 100 s bei Umgebungsdruck eine Schüttdichte von höchstens etwa 700 g/l, vorzugsweise von höchstens 400 g/l, besonders bevorzugt von höchstens 200 g/l, insbesondere von höchstens etwa 50 g/l, aufweisen.

### Verfahren zur Herstellung von Partikelschaum-Formteilen

Die Herstellung von Partikelschaum-Formteilen aus Polymerschaumpartikeln in Formteilautomaten ist dem Fachmann bekannt und umfasst gemäß Kunststoffe 12/2010, Carl Hanser Verlag, München, Seiten 134 - 137 prinzipiell die fünf Stufen
- Schließen des Werkzeugs;
- Füllen der Werkzeugkavität mit gleichzeitiger Kompression der Polymerschaumpartikel unter Einsatz von Druckluft;
- Erweichen, Expandieren und Versintern der Polymerschaumpartikel unter Einsatz von Wasserdampf;
- Kühlen und Stabilisieren durch Kühlwasser, gegebenenfalls durch Vakuumunterstützung;
- Entformen und gegebenenfalls aus Gründen der Maßhaltigkeit Trockenen in Temperöfen.

In **Kunststoffe 12/2010** ist auf **Seite 135** ein Formteilautomat zur Herstellung von Partikelschaum-Formteilen in Bild 2, sowie schematisch der Partikelschaumprozess in Bild 3 dargestellt. Aus einem Vorratssilo werden die Polymerschaumpartikel in eine Druckfüllanlage gesaugt und komprimiert. Die vorkomprimierten Polymerschaumpartikel werden mittels Druckluft durch Injektoren in eine Werkzeugkavität gefüllt. Die Komprimierung der Polymerschaumpartikel beeinflusst die spätere Formteildichte. Üblicherweise befinden sich in der Werkzeugkavität Düsen mit Durchmessern im Zehntelmillimeterbereich deren Aufgabe es ist, die Entlüftung während der Füllung und die Einleitung des Prozessdampfes zu gewährleisten. Der hier verwendete Prozessdampf erweicht die Polymerschaumpartikel soweit, dass eine Versinterung zum Formteil stattfinden kann. Ein Kühlsystem im Werkzeug beschleunigt die Stabilisierung des Partikelschaum-Formteils und sorgt damit für eine relativ zügige Entformbarkeit nach einer Gesamtzykluszeit von ca. 60 bis 180 s je nach Bauteilgeometrie.

Bis vor wenigen Jahren stellte diese in Kunststoffe 12/2010, Seiten 134 - 137 dargestellte dampfbasierte Verarbeitung von Partikelschaum-Rohmaterial wie EPP (expandiertes Polypropylen) und EPS (expandiertes Polystyrol) auf Formteilautomaten mit Prozessdampfdrücken von bis zu 5 bar und somit maximalen Temperaturen von bis zu max. 160°C den Stand der Technik dar. Dabei wird die benötigte Verarbeitungstemperatur über den Dampfdruck geregelt. Die Verarbeitung von technischen Thermoplasten mit vergleichsweise hoher Schmelz- bzw. Glasübergangstemperatur, wie etwa E-PBT und E-PET, benötigen in der Regel auch höhere Verarbeitungstemperaturen, welche mit Standard-Verarbeitungsequipment nicht darstellbar sind.

Die heute in der Karosserieherstellung übliche kathodische Tauchlackierung (KTL) mit Einbrenntemperaturen im Bereich von 200 bis 230°C erfordert für Thermoplast enthaltende Kraftfahrzeugbauteile eine deutlich höhere Temperaturbeständigkeit des dabei einzusetzenden Thermoplasten. Für eine solche Anwendung ist gemäß D. Schulz, VDWF im Dialog 4/2016, Seiten 3 - 7 ein entsprechender Partikelschaum auf Basis von expandiertem Polybutylenterephthalat (E-PBT) geeignet. Bauteile aus E-PBT weisen eine um rund 100°C höhere thermische Einsatzgrenze auf, verglichen mit EPP gleicher Dichte. Untersuchungen zur Wärmeformbeständigkeit belegen, dass aus diesem Werkstoff hergestellte Probekörper auch bei 200°C, denen sie über 30 Minuten ausgesetzt waren, noch absolut dimensions- und formstabil sind. Aufgrund der höheren Temperaturbeständigkeit erfordert die Verarbeitung von E-PBT auch höhere Dampfdrücke von über 10 bar. Dies wiederum stellt deutlich höhere Anforderungen an Werkzeuge, Maschinen und Sicherheitstechnik.

Partikelschäume auf Basis von PBT weisen höhere Dichten auf, als solche auf Basis von EPP und EPS. Dieses schränkte bisher ihr Leichtbaupotenzial erheblich ein. Dieser Herausforderung kann nun einerseits durch den Einsatz von PET zur Verbreiterung des Verarbeitungsfensters umgangen werden, sowie indem die in der Regel bereits vorgeschäumten PBT basierten Polymerschaumpartikel unter erhöhtem Druck mit Gas, vorzugsweise Stickstoff, Kohlendioxid oder Luft, insbesondere Kohlendioxid, beladen und in nachfolgenden Schritten weiter aufgeschäumt werden, um deren Dichte zu verringern.

Für die Herstellung von Partikelschäumen neu entwickelte Prozessanlagen, auch als Pressure And Temperature-Anlagen bezeichnet (PAT-Anlagen) erlauben die Steuerung sowohl des Beladungsdrucks, als auch der Temperatur im Drucktank. Da die Diffusionsgeschwindigkeit in Polymeren oberhalb deren Glasübergangstemperatur deutlich ansteigt, kann so eine schnelle Druckbeladung auch von technischen Kunststoffen wie PBT realisiert werden. Mit modernen PAT-Anlagen können Partikelschäume bei Drücken im Bereich von 0 bis 14 bar und Temperaturen bis 200°C mit Gas beladen werden. Daneben kann das Ausgangsgranulat gleichzeitig auch mit flüssigen, viskosen oder pulverförmigen Funktionsstoffen, z. B. zur elektrischen Leitfähigkeit oder für Farbeffekte, automatisch beschichtet werden. Durch optimierte Druckbeladungsparameter gelang es beispielsweise, die Schüttdichte von expandierten Thermoplasten soweit zu verringern und damit Formteile zu erzeugen, die sogar 44 % leichter sind, als auf konventionellem Weg geschäumte Bauteile. Erfindungsgemäß einzusetzende PAT-Anlagen sind erhältlich bei Teubert Maschinenbau GmbH, Blumberg, Germany als Teubert EPP Unimat oder Teubert TVZ.

Wie schnell die Polymerschaumpartikel jedoch mit Luft, Stickstoff oder Kohlendioxid "befüllt" werden können, hängt erheblich von den dabei herrschenden Temperaturbedingungen ab. Bislang arbeiten industriell etablierte Druckbeladungsanlagen lediglich bei Raumtemperatur. Neuere Anlagen erlauben die Steuerung sowohl des Beladungsdrucks, als auch der Temperatur im Drucktank. Da die Diffusionsgeschwindigkeit in Thermoplasten oberhalb deren Glasübergangstemperatur deutlich ansteigt, kann so eine schnelle Druckbeladung auch von technischen Kunststoffen wie PBT realisiert werden.

Durch die Kombination von additiver Werkzeugherstellung und komplett dampffreier Verarbeitung eröffnen moderne Verfahren in Kombination mit PET sowie vorzugsweise zusätzlich mit Talkum modifiziertem PBT völlig neue Perspektiven hinsichtlich Funktionalisierung und Leichtbau. So lassen sich Formteile mit lokalen Verstärkungen sowie aus Gradienten- und Mischwerkstoffen «in situ», also prozessintegriert, werkzeugfallend und nacharbeitsfrei fertigen. Oberflächen können durch in die Form eingebrachte Textilien, Folien, Strukturelemente bis hin zu Papier nahezu beliebig gestaltet werden. Das An- oder Umschäumen von Metall- oder Kunststoffelementen, selbst ungehäusten, elektronischen oder optischen Komponenten ist ebenfalls gut möglich.

Weiteres Applikationspotential ergibt sich verfahrensbedingt bei geschlossenen Strukturen. Auf mehreren Seiten mit undurchlässigen Deckschichten versehene Sandwichaufbauten können nun mit PET sowie vorzugsweise zusätzlich mit Talkum modifiziertem PBT dampffrei «in process» gefertigt werden. Dieser innovative Ansatz zur Partikelschaumverarbeitung bietet zahlreiche Möglichkeiten und neue Anwendungen insbesondere im Leichtbau durch lokal funktionalisierten Materialeinsatz.

Die aus dem Expansionsprozess, insbesondere aus dem Infrarotdurchlaufofen, erfindungsgemäß erhältlichen und anschließend stabilisierten Polymerschaumpartikel können unmittelbar anschließend oder auch erst nach Lagerung in einem weiteren Schritt zu Erzeugnissen bzw. Formkörpern weiterverarbeitet werden. Für das Formschäumen wird erfindungsgemäß ein variotherm temperierbares Werkzeug eingesetzt.

Die Erfindung betrifft auch Erzeugnisse oder Formkörper basierend auf den oben beschriebenen bzw. nach obigem Verfahren erhältlichen Polymerschaumpartikeln indem diese einem variotherm temperierbaren Werkzeug zugeführt werden. Die Erfindung betrifft deshalb auch Erzeugnisse oder Formkörper erhältlich durch Vorschäumen von Polymerschaumpartikeln gemäß obigem Verfahren unter Energieeintrag und Zuführen derselben einem variotherm temperierbaren Werkzeug zwecks Ausformung.

Die im Technikum dampffrei formgeschäumten Muster entstehen mithilfe hochthermodynamischer Werkzeuge (Heiz- und Abkühlraten von bis zu 30 K/sec). Im Bereich von Raumtemperatur (23 +/- 2°C) bis etwa 190°C - technisch möglich sind derzeit über 250°C - werden so je nach Zielwanddicke Zykluszeiten von unter einer Minute erreicht. Prinzipiell bestehen Sandwichstrukturen, als besondere Ausführungsformen erfindungsgemäßer Partikelschaum-Formteile, immer aus zwei hochfesten und steifen Deckschichten, die über eine adhäsive Grenzschicht mit einem möglichst leichten schubsteifen Kernmaterial verbunden sind. Die Deckschichten nehmen unter Belastung auftretende Zugkräfte an der Oberseite sowie Druckkräfte an der Unterseite auf, während der Kern für das Übertragen von Schubkräften zuständig ist. Durch das Erhöhen des Abstands der beiden Deckschichten voneinander vervielfachen sich Steifigkeit und Festigkeit, während das Gewicht einer erfindungsgemäßen Sandwichstruktur auf Grund der geringen Dichte des Kernmaterials nur geringfügig ansteigt.

Bei der erfindungsgemäßen dampffreien Partikelschaumverarbeitung mittels hochdynamischer variothermer Werkzeugtechnik kommen hochdynamisch-variotherme Werkzeugkavitäten zum Einsatz. Durch hochpräzises Erwärmen und Abkühlen der Werkzeugkavität können die Polymerschaumpartikel mittels Strahlungswärme von der Werkzeugkavitätswand und Wärmeleitung so erwärmt werden, dass sie an der Oberfläche anschmelzen und damit verschweißen, aber nicht bis in den Kern aufschmelzen. Abhängig von der verwendeten Temperiereinheit und des Temperiermediums, sind somit auch Verarbeitungstemperaturen deutlich jenseits der 160°C, ja erfindungsgemäß sogar Temperaturen zur Verarbeitung von erfindungsgemäß einzusetzendem und mit PET geblendetem PBT von deutlich über 200°C realisierbar.

Die dampffreie Partikelschaumverarbeitung mittels hochdynamischer variothermer Werkzeugtechnik erlaubt zudem das Verarbeiten hydrolyseempfindlicher Werkstoffe / Komponenten wie sie für Elektronikkomponenten / Sensorik benötigt werden, oder die Herstellung von Partikelschaumkernen, die mit Folien oder Faserverbunddeckschichten komplett umschlossen werden sollen.

Durch die erfindungsgemäße Verwendung von PBT in Kombination mit PET und zusätzlich vorzugsweise in Gegenwart von Talkum können nun Einsatzbereiche, die den konventionellen Partikelschäumen bisher verschlossen blieben, erschlossen werden. Aufgrund der immer kompakteren Bauweise von Motoren und der damit verbundenen Wärmeentwicklung ist erfindungsgemäß PET modifiziertes E-PBT (E für expandiert) ein geeigneter Kandidat für Isolierungen im Motorenraum. Ebenso ist es nun möglich, erfindungsgemäß PET modifiziertes E-PBT bereits in einem sehr frühen Stadium der Produktion in Karosserieelemente einzufügen, die dann im Verbund die Lackierung insbesondere in kathodischen Tauchlackier-Bädern (KTL) und Trocknungstunnel mit höheren Temperaturen (30 Minuten bei bis zu ca. 200°C) durchlaufen.

Verfahren und dabei einzusetzende Werkzeuge für die dampffreie Partikelschaumverarbeitung mittels hochdynamischer variothermer Werkzeugtechnik zur Herstellung großvolumiger bzw. dickwandiger Partikelschaumbauteile sind in DE 10 2018 007 301 A1**,** in EP 3 560 674 A1 und in EP 3 560 673 A1 beschrieben. Als Maßnahme zum Verbinden des Partikelschaummaterials bzw. der Partikelschaumpartikel wird dabei dampffreies Beaufschlagen des Partikelschaummaterials bzw. der Partikelschaummaterialpartikel mit thermischer Energie (Wärme) eingesetzt. Die thermische Energie kann zu einem zumindest abschnittsweisen Verkleben bzw.

Verschmelzen bzw. Versintern des Partikelschaummaterials bzw. der Partikelschaummaterialpartikel führen. Prinzipiell kommen sowohl konduktive, als auch konvektive Arten der Energieeinbringung und Energieübertragung in Betracht. Die Einbringung der thermischen Energie in das Partikelschaummaterial kann bzw. die Partikelschaummaterialpartikel können beispielsweise über Energieübertragung von wenigstens einem temperierbaren bzw. temperierten Werkzeugwandungsabschnitt eines Werkzeugs erfolgen. Um ein gleichmäßiges Verschmelzen des Partikelschaummaterials im Formschäumprozess zu erzielen, muss die Wärme des variotherm temperierbaren Werkzeugs bis in die Mitte des Polymerschaumbauteils eindringen.

Die Erfindung betrifft vorzugsweise auch die **Verwendung** von Polyethylenterephthalat zur Verbreiterung des Verarbeitungsfensters von Polybutylenterephthalat als Matrixpolymer in der Herstellung von Polymerschaumpartikeln indem der Aufschmelzbereich von Polybutylenterephthalat von 225°C +/-2°C auf den Bereich von 223 bis 255°C erweitert wird, wobei auf 100 Massenanteile Polylbutylenterephthalat 25 bis 320 Massenanteile Polyethylenterephthalat, 0,1 bis 20 Massenanteile **Talkum** und 0,01 bis 20 Massenanteile Tetrakis(2,4-di-tert-butylphenyl)-4,4-biphenyldiphosphonit (**Hostanox**^{®} **P-EPQ**) eingesetzt werden.

Bevorzugt betrifft die erfindungsgemäße **Verwendung** die Verbreiterung des Verarbeitungsfensters **bei der dampffreien Partikelschaumverarbeitung** zu Partikelschaum-Erzeugnissen bzw. Formteilen mittels hochdynamischer variothermer Werkzeugtechnik. Besonders bevorzugt erfolgt diese erfindungsgemäße Verwendung in einem variothermen Werkzeug mit Tauchkante zur Druckaufbringung.

Variotherm setzt sich zusammen aus vario (lat. verschieden sein, sich verändern, schwanken) und therm (warm). Der Begriff variotherm wird häufiger im Spritzguss im Sinne einer "Methode die über den Zyklusverlauf Werkzeuge abgestimmt temperiert" verwendet. Das Prinzip einer hochdynamischen variothermen Werkzeugtechnik ist eine variotherme Werkzeugtemperierung, bei der die Werkzeugkavität so vortemperiert wird, dass das Polymer nach dem Einspritzen schmelzflüssig bleibt, wodurch eine präzise Abbildung der Oberflächenfeinheiten im Werkzeug und eine schlierenfreie Oberfläche erzielt werden. Durch ein optimiertes Temperiersystem mit konturnaher Flächentemperierung der Kavität benötigt der variotherme Prozess nur unwesentlich längere Kühlzeiten als der konventionelle mit Dampf betriebene Prozess. Weitere Vorteile sind das Wegfallen von sichtbaren Bindenähten am Enderzeugnis und eine erhebliche Reduktion des Bauteilverzugs. Diese Technologie wird bereits bei Spritzgiessprozessen eingesetzt. Vorteile sind eine höhere Qualität der Bauteiloberflächen, eine sehr gute Konturtreue und die Möglichkeit zum Abformen kleinster Mikro- und Nanostrukturen. Siehe hierzu:

**Entwicklungsprojekt gefördert unter dem Az: 32539/01 von der Deutschen Bundesstiftung Umwelt,** M. Feurer, A. Ungerer, "Die Entwicklung einer Variotherm-Technologie zur Halbierung des Energieverbrauchs in der EPP-Formteilherstellung" aus April 2017**.** Der Inhalt dieser Literaturstelle wird von der vorliegenden Anmeldung vollumfänglich umfasst, wobei EPP für expandiertes Polypropylen steht.

Die erfindungsgemäße Verwendung dient der Herstellung von Struktur- und/oder Isolierschaum, wobei es sich bei Strukturschäumen in einer Ausführungsform um Sandwichstrukturen handelt. Erfindungsgemäße Strukturschäume oder Isolierschäume werden vorzugsweise im Hochleistungsleichtbau eingesetzt. Erfindungsgemäß erhältliche PBT basierte Erzeugnisse aus expandiertem PBT-Partikelschaum mit typischen Dichten im Bereich von 200 bis 800 kg/m³ sind extrem leicht. Gerade deshalb zeichnen sie sich durch gute spezifische mechanische Eigenschaften, thermische Isolierfähigkeit und enormes Leichtbaupotenzial aus.

Bevorzugte Einsatzgebiete für Struktur- und/oder Isolierschäume sind in der Luft- und Raumfahrt, in der Verteidigungstechnik, bei Windkraft-Rotorblättern, im Automobilbau oder im Schiffbau.

### Beispiele

### Herstellung von Polymerschaumpartikeln

Die Beladung mit CO₂ eines erfindungsgemäßen PET modifizierten PBT-Granulats enthaltend zusätzlich Talkum und Hostanox^{®} P-EPQ mit einem Korndurchmesser im Bereich von 0,5 bis 2 mm und einer Länge im Bereich von 0,5 bis 3 mm wurde in einem Autoklaven bei einem Druck von 10 bis 70 bar über einen Zeitraum von 5 bis 50 h durchgeführt. Anschließend wurde das mit CO₂ beladene PBT-Granulat durch einen Infrarotdurchlaufofen (einzügiger Infrarotdurchlaufofen SL der Fox Velution GmbH) mit einer Strahlerleistung von 90% (hier: ca. 20 kW) bei einer am Ausgang des Ofens gemessenen Temperatur im Bereich von 220 bis 255°C (es wurden lediglich Referenzbandtemperaturen optisch gemessen - im Ofen herrschten an unterschiedlichen Positionen verschiedenste Temperaturen von 50°C bis 950°C) mit einer Geschwindigkeit von 500 bis 800 mm/s geführt. Abschließend wurden die Partikel für 24 Stunden bei Raumtemperatur stabilisiert.

Die Versuche im Rahmen der vorliegenden Erfindung zeigten überraschenderweise, dass der Einsatz von PET in PBT die Wachstumsgeschwindigkeit von an den Nukleierungspunkten entstehenden Polymerschaumzellen reduzierte. Damit entstanden an mehr Nukleierungspunkten Polymerschaumzellen. Das führte wiederum zu Polymerschaumpartikeln mit einer gleichmäßigeren Zellstruktur aus kleinen Zellen.

Durch den erfindungsgemäßen Einsatz von PET in PBT wurde zudem die Schmelzviskosität erhöht. Besonders bei niedrigen Schergeschwindigkeiten im Bereich von 50 bis 200 Pa.s, wie sie beim Zellwachstum auftreten. Mit PET Anteilen >25% beim Aufschäumen im Infrarotdurchlaufofen stieg die Schmelzviskosität des mit PET modifizierten PBTs gegenüber Standard-PBT von 109 bis 112 auf >200 Pa·s an.

Die rheologischen Daten in Tab. 1 zeigen, dass der Einsatz von PET in PBT zu einer deutlich höheren Schmelzviskosität im niedrigen Schwergeschwindigkeitsbereich führt, was insbesondere bei der Expansion der Zellen und damit für das Zellenwachstum wesentlich ist.

Der erfindungsgemäße Einsatz von PET in PBT führte andererseits nur zu sehr geringer Erhöhung der Dichte des Granulats vor dem Schäumen von 1,319g/cm³ auf 1,346g/cm³ und ist mit einem Unterschied von ca. 2% zu vernachlässigen.

### Formschäumen

Die Polymerschaumpartikel wurden in einem Formschäumprozess in einem variotherm beheizbaren Werkzeug mit einer Temperatur im Bereich von 225 - 255°C zu Würfeln als exemplarisches Formteil mit den Maßen 25 • 25 • 10mm geformt. Die Aufheizrate des Werkzeugs betrug bis zu 8K/s und die Haltezeit in der Temperatur 5 - 15 min. Nach dem Formen wurde das Werkzeug mit einer Abkühlrate von bis zu 8K/s auf Raumtemperatur abgekühlt und das Formteil aus der Form des Werkzeugs gelöst und entnommen. Die Dichte der Würfel betrug nach 24 Stunden bei Raumtemperatur 392kg/m³.

Überraschenderweise führte der erfindungsgemäße Einsatz von PET in PBT basierten Polymerschaumpartikeln, insbesondere in Kombination mit Talkum und insbesondere ganz besonders bevorzugt zusätzlich mit Hostanox^{®} P-EPQ, zu einer Verbreiterung des Prozessfensters beim Formschäumen von <4K auf <30K, wenn diese dampffrei in einem variotherm beheizbaren Werkzeug bei einer Temperatur im Bereich von 225 - 255°C durchgeführt wurde!

### Einsatzstoffe

Polybutylenterephthalat (PBT): Pocan^{®} B 1300 von der Lanxess Deutschland GmbH;
Polyethylenterephthalat (PET): Lighter C88 von Equipolymers s.r.l., Amsterdam, Niederlande;
Talkum: Mistron^{®} R10 von Imerys Talc Group, Toulouse, Frankreich
Hostanox^{®} P-EPQ, Hersteller BASF SE, Ludwigshafen

**Tab. 1**

| | Einheit | Vgl.1 | Bsp.1 | Bsp.2 | Bsp.3 | Bsp.4 |
|---|---|---|---|---|---|---|
| PBT | [Gew.-%] | 99,4 | 74,4 | 74,4 | 49,4 | 64,4 |
| PET | [Gew.-%] | | 25 | 25 | 50 | 35 |
| TALKUM | [Gew.-%] | 0,5 | 0,5 | 0,5 | 0,5 | 0,5 |
| HOSTANOX^{®} P-EPQ | [Gew.-%] | 0,1 | 0,1 | 0,1 | 0,1 | 0,1 |
| | | | | | | |

| Technologie | | E/U* | E/U* | A/IR* | E/U* | A/IR* |
|---|---|---|---|---|---|---|
| Schüttdichte Polymerschaumpartikel | [kg/m³] | 173 | 276 | 218 | 160 | 95 - 294 |
| Formschäumtemperatur | | 231 | 236 | 236 | 230 | 236 |
| Formschäumtemperatur min. | [°C] | 230 | 225 | 225 | 225 | 225 |
| Formschäumtemperatur max. | [°C] | 232 | 255 | 255 | 255 | 257 |
| Formschäumprozessfenster | Kelvin | <2 | <30 | <30 | <30 | <32 |
| | | | | | | |
| Schaumpartikel Zellgröße | (mm) | 0,2 | 0,55 | 0,1 | 0,5 | 0,05 |
| | | | | | | |
| | | | | | | |

| Rheologische Prüfungen | | | | | | |
|---|---|---|---|---|---|---|
| Feuchte nach Karl Fischer (Visko) | [%] | 0,007 | 0,005 | 0,005 | 0,002 | n.a. |
| Schmelzviskosität 260°C ETA (50/s) | [Pas] | 111 | 149 | 149 | 244 | 285 |
| Schmelzviskosität 260°C ETA (100/s) | [Pas] | 112 | 135 | 135 | 219 | 250 |
| Schmelzviskosität 260°C ETA (200/s) | [Pas] | 109 | 138 | 138 | 215 | 248 |
| Schmelzviskosität 260°C ETA (500/s) | [Pas] | 113 | 136 | 136 | 188 | 214 |
| Schmelzviskosität 260°C ETA (1000/s) | [Pas] | 99 | 120 | 120 | 155 | 176 |
| Schmelzviskosität 260°C ETA (1500/s) | [Pas] | 92 | 114 | 114 | 134 | 152 |
| Schmelzviskosität 260°C ETA (5000/s) | [Pas] | 62 | 71 | 71 | 83 | 91 |

| | | | | | | |
|---|---|---|---|---|---|---|
| ***E/U = Extrusion mit Treibmittel und Unterwassergranulierung** **** A/IR = Autoklav Gasbeladung und aufschäumen im Infrarotdurchlaufofen** | | | | | | |

## Patentansprüche

1. Polymerschaumpartikel enthaltend wenigstens ein Treibmittel ausgewählt aus der Gruppe Luft, Stickstoff und Kohlendioxid sowie auf 100 Massenanteile Polybutylenterephthalat 25 bis 320 Massenanteile Polyethylenterephthalat.

2. Polymerschaumpartikel gemäß Anspruch 1, **dadurch gekennzeichnet, dass** diese eine Dichte im Bereich von 50 bis 700 kg/m³, vorzugsweise im Bereich von 90 bis 400 kg/m³, aufweisen.

3. Polymerschaumpartikel gemäß Anspruch 1 oder 2, **dadurch gekennzeichnet, dass** diese 0,1 bis 20 Massenanteile, vorzugsweise 0,1 bis 5 Massenanteile Talkum enthalten.

4. Polymerschaumpartikel gemäß Anspruch 3, **dadurch gekennzeichnet, dass** diese auf 100 Massenanteile PBT zusätzlich zum Talkum 0,1 bis 20 Massenanteile, besonders bevorzugt 0,1 bis 5 Massenanteile, wenigstens eines weiteren, von Talkum verschiedenen Additivs enthalten.

5. Polymerschaumpartikel gemäß Anspruch 4, **dadurch gekennzeichnet, dass** wenigstens ein Additiv aus der Reihe UV-Stabilisatoren, Thermostabilisatoren, Gleit- und Entformungsmittel, Füll- und Verstärkungsstoffe, Nukleierungsmittel verschieden von Talkum, Laserabsorber, di- oder mehrfunktionelle verzweigend ^^oder kettenverlängernd wirkende Additive, Hydrolysestabilisatoren, Antistatika, Emulgatoren, Weichmacher, Verarbeitungshilfsmittel, Fließhilfsmittel, Elastomermodifikatoren und Farbmittel eingesetzt wird.

6. Polymerschaumpartikel gemäß Anspruch 4, **dadurch gekennzeichnet, dass** als Additiv Tetrakis(2,4-di-tert-butylphenyl)-4,4-biphenyldiphosphonit eingesetzt wird.

7. Verfahren zur Herstellung von Polymerschaumpartikeln indem man Pulver oder Granulat einer Polymermatrix
(a) in einen Extruder unter Ausschluss von Vernetzungsmitteln und/oder Kettenverlängerungsmitteln einsetzt und plastifiziert und homogenisiert,
(b) ein Treibmittel ausgewählt aus der Gruppe Luft, Stickstoff und Kohlendioxid zusetzt und in die plastifizierte Polymermatrix in einen Extruder eindispergiert,
(c) die mit dem Treibmittel versetzte, plastifizierte Polymermatrix aus dem Extruder durch eine Extruderdüse austrägt,
(d) den extrudierten und mit dem Treibmittel versetzten Polymermatrixstrang stromab der Extruderdüse unter Bildung expandierbarer oder zumindest teilweise expandierter Polymerschaumpartikel granuliert, und
(e) die Polymerschaumpartikel expandiert, vorzugsweise thermisch expandiert,
**dadurch gekennzeichnet, dass** die Polymermatrix auf 100 Massenanteile Polybutylenterephthalat 25 bis 320 Massenanteile Polyethylenterephthalat enthält.

8. Verfahren gemäß Anspruch 7, **dadurch gekennzeichnet, dass** die Verfahrensschritte (c) und (d) mit oder in einem Kühlfluid durchgeführt werden.

9. Verfahren gemäß Anspruch 7 oder 8, **dadurch gekennzeichnet, dass** Verfahrensschritt (e) in einem Infrarotdurchlaufofen erfolgt.

10. Verfahren gemäß einem oder mehreren der Ansprüche 7 bis 9, **dadurch gekennzeichnet, dass** die Polymerschaumpartikel eine Dichte im Bereich von 50 bis 700 kg/m³, vorzugsweise im Bereich von 90 bis 400 kg/m³, aufweisen.

11. Verfahren gemäß Anspruch 10, **dadurch gekennzeichnet, dass** die Polymermatrix 0,1 bis 20 Massenanteile, vorzugsweise 0,1 bis 5 Massenanteile Talkum enthält.

12. Verfahren gemäß Anspruch 11, **dadurch gekennzeichnet, dass** die Polymermatrix zusätzlich 0,1 bis 20 Massenanteile, besonders bevorzugt 0,1 bis 5 Massenanteile, wenigstens eines weiteren von Talkum verschiedenen Additivs enthält, wobei vorzugsweise wenigstens ein Additiv aus der Reihe UV-Stabilisatoren, Thermostabilisatoren, Gleit- und Entformungsmittel, Füll- und Verstärkungsstoffe, Nukleierungsmittel verschieden von Talkum, Laserabsorber, di- oder mehrfunktionelle verzweigend oder kettenverlängernd wirkende Additive, Hydrolysestabilisatoren, Antistatika, Emulgatoren, Weichmacher, Verarbeitungshilfsmittel, Fließhilfsmittel, Elastomermodifikatoren und Farbmittel eingesetzt wird, insbesondere Tetrakis(2,4-di-tert-butylphenyl)-4,4-biphenyldiphosphonit.

13. Verwendung von Polyethylenterephthalat zur Verbreiterung des Verarbeitungsfensters von Polybutylenterephthalat als Matrixpolymer enthaltenden expandierbaren oder zumindest teilweise expandierten Polymerschaumpartikeln beim Formschäumen von Polybutylenterephthalat von 225°C +/-2°C auf den Bereich von 223 bis 255°C und/oder zur Erhöhung der Schmelzviskosität von Polybutylenterephthalat, **dadurch gekennzeichnet, dass** auf 100 Massenanteile Polylbutylenterephthalat 25 bis 320 Massenanteile Polyethylenterephthalat eingesetzt werden.

14. Verwendung gemäß Anspruch 13, **dadurch gekennzeichnet, dass** es sich um das Verarbeitungsfenster beim Formschäumen mittels dampffreier Partikelschaumverarbeitung zu Partikelschaum-Formteilen in einem variotherm beheizbaren Werkzeug handelt.

15. Verwendung gemäß einem der Ansprüche 13 oder 14, **dadurch gekennzeichnet, dass** diese der Herstellung von Struktur- und/oder Isolierschaum dient.

16. Verwendung gemäß Anspruch 15, **dadurch gekennzeichnet, dass** es sich bei den Strukturschäumen um Sandwichstrukturen handelt.

17. Verwendung gemäß einem der Ansprüche 15 oder 16, **dadurch gekennzeichnet, dass** diese im Hochleistungsleichtbau eingesetzt werden.

18. Verwendung gemäß einem oder mehreren der Ansprüche 15 bis 17, **dadurch gekennzeichnet, dass** die Anwendung der Struktur- und/oder Isolierschäume in der Luft- und Raumfahrt, in der Verteidigungstechnik, bei Windkraft-Rotorblättern, im Automobilbau oder im Schiffbau erfolgt.

19. Erzeugnisse oder Formkörper erhältlich durch Vorschäumen von Polymerschaumpartikeln gemäß einem oder mehreren der Ansprüche 1 bis 6 unter Energieeintrag und Zuführen derselben einem variotherm temperierbaren Werkzeug zwecks Ausformung.

## Claims

1. Polymer foam particles containing at least one blowing agent selected from the group of air, nitrogen and carbon dioxide and 25 to 320 parts by mass of polyethylene terephthalate per 100 parts by mass of polybutylene terephthalate.

2. Polymer foam particles according to claim 1, **characterized in that** these have a density in the range of from 50 to 700 kg/m³ , preferably in the range of from 90 to 400 kg/m³.

3. Polymer foam particles according to claim 1 or 2, **characterized in that** they contain 0.1 to 20 parts by mass, preferably 0.1 to 5 parts by mass of talc.

4. Polymer foam particles according to claim 3, **characterized in that** they contain, per 100 parts by mass of PBT in addition to talc, 0.1 to 20 parts by mass, particularly preferably 0.1 to 5 parts by mass, of at least one further additive other than talc.

5. Polymer foam particles according to claim 4, **characterized in that** at least one additive from the series of UV stabilizers, thermostabilizers, lubricants and demoulding agents, fillers and reinforcing agents, nucleating agents other than talc, laser absorbers, di- or multifunctional branching or chain-extending additives, hydrolysis stabilizers, antistatic agents, emulsifiers, plasticizers, processing aids, flow aids, elastomer modifiers and colouring agents is used.

6. Polymer foam particles according to claim 4, **characterized in that** tetrakis(2,4-di-tert-butylphenyl)-4,4-biphenyldiphosphonite is used as additive.

7. Method for the preparation of polymer foam particles by adding powder or granules of a polymer matrix
(a) into an extruder with the exclusion of crosslinking agents and/or chain extenders and by plasticizing and homogenizing,
(b) adding a blowing agent selected from the group of air, nitrogen and carbon dioxide and dispersing it into the plasticized polymer matrix in an extruder,
(c) discharging the plasticized polymer matrix mixed with the blowing agent from the extruder through an extruder nozzle,
(d) granulating the extruded polymer matrix strand mixed with the blowing agent downstream of the extruder nozzle to form expandable or at least partially expanded polymer foam particles, and
(e) expanding the polymer foam particles, preferably thermally,
**characterized in that** the polymer matrix contains 25 to 320 parts by mass of polyethylene terephthalate per 100 parts by weight of polybutylene terephthalate.

8. Method according to claim 7, **characterized in that** process steps (c) and (d) are carried out with or in a cooling fluid.

9. Method according to claim 7 or 8, **characterized in that** process step (e) takes place in a continuous infrared oven.

10. Method according to one or more of claims 7 to 9, **characterized in that** the polymer foam particles have a density in the range of from 50 to 700 kg/m³ , preferably in the range from 90 to 400 kg/m³.

11. Method according to claim 10, **characterized in that** the polymer matrix contains 0.1 to 20 parts by mass, preferably 0.1 to 5 parts by mass of talc.

12. Method according to claim 11, **characterized in that** the polymer matrix additionally contains 0.1 to 20 parts by mass, particularly preferably 0.1 to 5 parts by mass, of at least one further additive other than talc, wherein preferably at least one additive from the series of UV stabilizers, thermostabilizers, lubricants and demoulding agents, fillers and reinforcing agents, nucleating agents other than talc, laser absorbers, di- or multifunctional branching or chain-extending additives, hydrolysis stabilizers, antistatic agents, emulsifiers, plasticizers, processing aids, flow aids, elastomer modifiers and colorants is used, in particular tetrakis(2,4-di-tert-butylphenyl)-4,4-biphenyl diphosphonite.

13. Use of polyethylene terephthalate for widening the processing window of expandable or at least partially expanded polymer foam particles containing polybutylene terephthalate as matrix polymer in the mold foaming of polybutylene terephthalate from 225°C +/-2°C to the range from 223 to 255°C and/or for increasing the melt viscosity of polybutylene terephthalate, **characterized in that** 25 to 320 parts by mass of polyethylene terephthalate are used per 100 parts by mass of polylbutylene terephthalate.

14. Use according to claim 13, **characterized in that** it is the processing window during mould foaming by means of vapourless particle foam processing to form particle foam mouldings in a variothermally heatable tool.

15. Use according to any of claims 13 or 14, **characterized in that** it serves to produce structural and/or insulating foam.

16. Use according to claim 15, **characterized in that** the structural foams are sandwich structures.

17. Use according to one of claims 15 or 16, **characterized in that** they are used in high-performance lightweight construction.

18. Use according to one or more of claims 15 to 17, **characterized in that** the application of the structural and/or insulating foams is in aviation and aerospace, defence, wind power rotor blades, automotive or shipbuilding.

19. Products or molded articles obtainable by pre-foaming polymer foam particles according to one or more of claims 1 to 6 with energy input and feeding them to a variothermally temperature-controlled tool for molding.

## Revendications

1. Particule en mousse polymère contenant au moins un agent gonflant choisi dans le groupe de l'air, de l'azote et du dioxyde de carbone, ainsi que 25 à 320 parties en masse de polyéthylène téréphtalate pour 100 parties en masse de polybutylène téréphtalate.

2. Particule en mousse polymère selon la revendication 1, **caractérisée en ce que** celle-ci présente une densité dans la plage de 50 à 700 kg/m³, de préférence, dans la plage de 90 à 400 kg/m³.

3. Particule en mousse polymère selon la revendication 1 ou la revendication 2, **caractérisée en ce que** celle-ci contient 0,1 à 20 parties en masse, de préférence, 0,1 à 5 parties en masse, de talc.

4. Particule en mousse polymère selon la revendication 3, **caractérisée en ce que** celle-ci contient, pour 100 parties en masse de PBT, outre le talc, de 0,1 à 20 parties en masse, de manière particulièrement préférée, de 0,1 à 5 parties en masse, d'au moins un autre additif, différent du talc.

5. Particule en mousse polymère selon la revendication 4, **caractérisée en ce qu'**au moins un additif de la gamme des stabilisants UV, des stabilisants thermiques, des produits lubrifiants et des produits de démoulage, des charges et des substances de renforcement, des produits de nucléation différents du talc, des absorbants de laser, des additifs di ou plurifonctionnels agissant sur la ramification ou la longueur des chaînes, des stabilisants d'hydrolyse, des antistatiques, des émulgateurs, des plastifiants, des produits d'aide au façonnage, des produits d'aide à l'écoulement, des modificateurs d'élastomères et des colorants, est employé.

6. Particule en mousse polymère selon la revendication 4, **caractérisée en ce que** du tétrakis (2,4-di-tert-butyl phényl)-4,4-biphényl diphosphonite est employé en tant qu'additif.

7. Procédé de fabrication de particules en mousse polymère dans lequel
(a) on emploie de la poudre ou des granulés d'une matrice de polymère dans une extrudeuse en excluant des produits de réticulation et/ou des produits prolongateurs de longueur de chaine, et on plastifie et homogénéise,
(b) on ajoute un activateur choisi dans le groupe de l'air, de l'azote et du dioxyde de carbone et on le disperse à l'intérieur de la matrice de polymère plastifiée dans une extrudeuse,
(c) on extrait la matrice de polymère plastifiée ayant réagi avec l'activateur de l'extrudeuse par une buse d'extrudeuse,
(d) on granule le morceau de matrice de polymère extrudé et ayant réagi avec l'activateur en aval de la buse d'extrudeuse moyennant la formation de particules en mousse polymère expansées ou au moins partiellement expansées, et
(e) on expanse la particule en mousse polymère, de préférence par voie thermique,
**caractérisé en ce que** la matrice de polymère contient de 25 à 320 parties en masse de polyéthylène téréphtalate pour 100 parties en masse de polybutylène téréphtalate.

8. Procédé selon la revendication 7, **caractérisé en ce que** les étapes de procédé (c) et (d) sont effectuées avec ou dans un fluide de refroidissement.

9. Procédé selon la revendication 7 ou la revendication 8, **caractérisé en ce que** l'étape de procédé (e) a lieu dans un four continu infrarouge.

10. Procédé selon une ou plusieurs des revendications 7 à 9, **caractérisé en ce que** les particules en mousse polymère présentent une densité dans la plage de 50 à 700 kg/m³, de préférence, dans la plage de 90 à 400 kg/m³.

11. Procédé selon la revendication 10, **caractérisé en ce que** la matrice de polymère contient 0,1 à 20 parties en masse, de préférence, 0,1 à 5 parties en masse, de talc.

12. Procédé selon la revendication 11, **caractérisé en ce que** la matrice de polymère contient de 0,1 à 20 parties en masse, de manière particulièrement préférée, de 0,1 à 5 parties en masse, d'au moins un autre additif différent du talc, où, de préférence, au moins un additif de la gamme des stabilisants UV, des stabilisants thermiques, des produits lubrifiants et des produits de démoulage, des charges et des substances de renforcement, des produits de nucléation différents du talc, des absorbants de laser, des additifs di ou plurifonctionnels agissant sur la ramification ou la longueur des chaînes, des stabilisants d'hydrolyse, des antistatiques, des émulgateurs, des plastifiants, des produits d'aide au façonnage, des produits d'aide à l'écoulement, des modificateurs d'élastomères et des colorants, est employé, en particulier, du tétrakis (2,4-di-tert-butyl phényl)-4,4-biphényl diphosphonite.

13. Utilisation de polyéthylène téréphtalate pour l'élargissement de la fenêtre de façonnage de polybutylène téréphtalate servant de matrice de polymère contenant des particules en mousse polymère expansible ou au moins partiellement expansible, lors du moulage de mousse du polybutylène téréphtalate à partir de 225 °C ± 2 °C, sur la plage de 223 à 255 °C, et/ou pour l'augmentation de la viscosité à l'état fondu du polybutylène téréphtalate, **caractérisée en ce que**, pour 100 parties en masse de polybutylène téréphtalate, on emploie de 25 à 320 parties en masse de polyéthylène téréphtalate.

14. Utilisation selon la revendication 13, **caractérisée en ce qu'**il s'agit, pour la fenêtre de façonnage lors du moulage de mousse au moyen d'un façonnage des particules de mousse en pièces moulées de mousse de particules en mousse, d'un outil pouvant être chauffé de manière variotherme.

15. Utilisation selon la revendication 13 ou la revendication 14, **caractérisée en ce que** celle-ci sert à la fabrication de mousse de structure et/ou d'isolation.

16. Utilisation selon la revendication 15, **caractérisée en ce que**, dans le cas des mousses de structure, il s'agit de mousses en sandwichs.

17. Utilisation selon l'une des revendications 15 ou 16, **caractérisée en ce que** celle-ci est employée dans la construction légère haute performance.

18. Utilisation selon l'une ou plusieurs des revendications 15 à 17, **caractérisée en ce que** l'emploi des mousses de structure et/ou d'isolation a lieu dans le domaine aérospatial, dans la technologie de la défense, dans les pales de rotor d'énergie éolienne, dans la construction d'automobiles ou dans la construction navale.

19. Produits ou articles moulés disponibles par un prémoussage de particules en mousse polymère selon l'une ou plusieurs des revendications 1 à 6 moyennant un apport d'énergie et l'approvisionnement de celles-ci dans un outil pouvant être thermostaté de manière variotherme à des fins de façonnage.
